(19) Europäisches Patentamt
European Patent Office
Office européen des brevets

(11) **EP 3 220 066 B1**

(12) **EUROPÄISCHE PATENTSCHRIFT**

(45) Veröffentlichungstag und Bekanntmachung des Hinweises auf die Patenterteilung:
**15.05.2019  Patentblatt 2019/20**

(51) Int Cl.:
*F24D 19/10* *(2006.01)*      *G05D 23/19* *(2006.01)*

(21) Anmeldenummer: **17158628.2**

(22) Anmeldetag: **01.03.2017**

(54) **VERFAHREN UND STEUEREINRICHTUNG ZUR ERHÖHUNG DES NUTZUNGSGRADS EINES WÄRMEERZEUGERS IN EINER HEIZUNGSANLAGE**

METHOD AND CONTROLLER FOR INCRESING THE DEGREE OF UTILISATION OF A HEAT GENERATOR WITHIN A HEATING SYSTEM

MÉTHODE ET CONTROLEUR POUR AUGMENTER LE TAUX D'UTILISATION D'UN GÉNÉRATEUR DE CHALEUR DANS UN SYSTÈME DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2016   DE 102016104666**

(43) Veröffentlichungstag der Anmeldung:
**20.09.2017   Patentblatt 2017/38**

(73) Patentinhaber: **Techem Energy Services GmbH 65760 Eschborn (DE)**

(72) Erfinder:
• **Kähler, Arne 61350 Bad Homburg (DE)**
• **Seifert, Joachim 01189 Dresden (DE)**
• **Meinzenbach, Andrea 01187 Dresden (DE)**
• **Haupt, Jens 01257 Dresden (DE)**

(74) Vertreter: **Keil & Schaafhausen Patent- und Rechtsanwälte PartGmbB Friedrichstraße 2-6 60323 Frankfurt am Main (DE)**

(56) Entgegenhaltungen:
**EP-A2- 2 182 297        WO-A1-2009/140986 US-A1- 2002 060 251**

**Beschreibung**

Das erfindungsgemäße Verfahren und die erfindungsgemäße Steuereinrichtung zur Erhöhung des Nutzungsgrads eines Wärmeerzeugers in einer Heizungsanlage betreffen insbesondere Warmwasser-Heizungsanlagen, in denen die zentrale Heizungsversorgung mittels Wärmeerzeuger erfolgt. Grundsätzlich funktioniert das beschriebene Verfahren auch bei einer Kühlung entsprechend, wobei der Fachmann die Wirkrichtung des Prozesses von der Heizung auf die Kühlung entsprechend umkehren und die beschriebenen Abfragen und Schwellwerte entsprechend anpassen muss.

Der Wärmeerzeuger kann eine Einrichtung aufweisen, die Endenergie verbraucht und daraus Wärme erzeugt, die zur Erwärmung des Wärmeträgermediums genutzt wird. Typischer Weise kann der Wärmeerzeuger ein bspw. mit Gas oder Öl als eingesetzte Endenergie betriebener Brenner sein, bspw. ein üblicher Brennwertkessel oder herkömmlicher Brenner eines Heizkessels. Grundsätzlich kann der Wärmeerzeuger auch ein elektrischer Erhitzer sein, in dem Strom bspw. über eine Heizpatrone oder dergleichen in Wärme verwandelt wird. Ein anderes Beispiel für einen elektrisch betriebenen Wärmeerzeuger kann auch eine Wärmepumpe sein, die über einem thermodynamischen Kreisprozess einem Medium Wärme entzieht und einem anderen Medium zuführt. In diesem Sinne kann der Wärmeerzeuger also auch ein Wärmeübertrager sein.

Der Wärmeerzeuger erzeugt aus oder mittels Endenergie Wärme, die an einen Rohrkreislauf übergeben wird. Der Rohrkreislauf kann insbesondere aus einem Vorlauf und Rücklauf der Heizungsanlage bestehen, in dem ein Wärmeübertragungsmedium zirkuliert. Die Erfassung der Verbräuche an Brennstoff bzw. Endenergie, bspw. Elektroenergie bei einer Wärmepumpe, vor dem Wärmeerzeuger und der Wärme nach dem Wärmeerzeuger erfolgt mit geeigneten Erfassungssystemen, wie Brennstoffverbrauchserfassungssystemen (wie bspw. Ölstandsanzeigen) oder Zählern (wie bspw. Gas-, Wärme-, Elektrozählern). Moderne Erfassungssysteme sind häufig mit Kommunikationsmodulen zur Übertragung der aktuellen Verbräuche und ggf. weiterer Größen, wie Temperaturen, Durchflüssen oder sonstigen erfassten Größen, ausgestattet. Darüber hinaus sind die heizungstechnischen Anlagen, und hier speziell die im Raum befindlichen freien Heizflächen, mit kommunikationsfähigen, vorzugsweise funkgestützten, elektronischen Heizkostenverteilern ausgestattet.

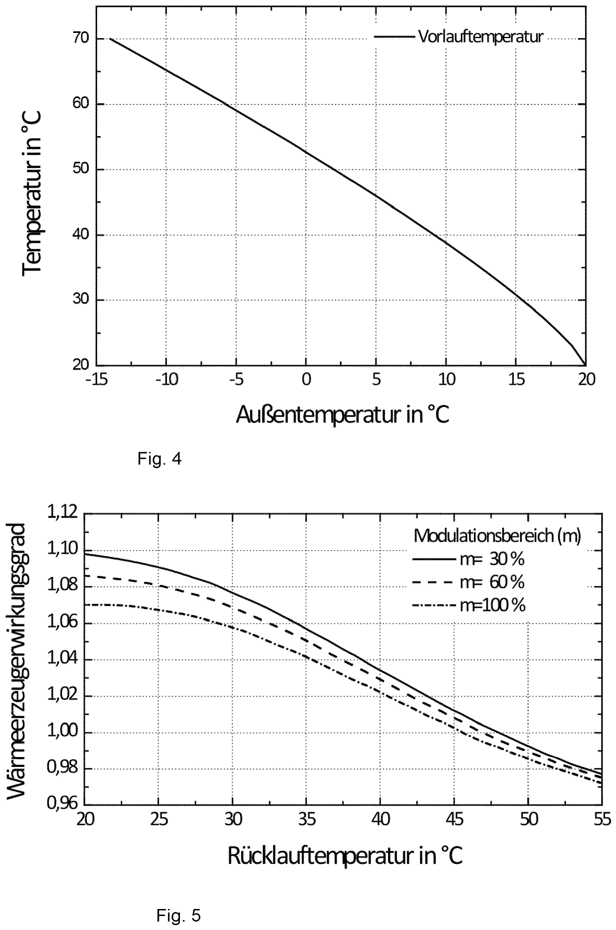

Wärmeerzeuger heizungstechnischer Anlagen im Gebäude werden derzeit meist mit einer konstanten Vorlauftemperatur $\vartheta_V$ oder mit einer nach der Außentemperatur durch eine vordefinierte Heizkurve gesteuerten Vorlauftemperatur $\vartheta_V^{\text{Heizkruve}}$ betrieben, wie sie beispielhaft in Fig. 4 dargestellt ist. Entsprechend dem Heizbedarf steigt die Vorlauftemperatur $\vartheta_V$ mit sinkender Außentemperatur $\vartheta_A$, wobei der genaue Verlauf der Heizkurve an die Heizungsanlage angepasst werden kann.

Alternativ zu einer durch eine Heizkurve fest vorgegebenen Vorlauftemperatur $\vartheta_V^{\text{Heizkruve}}$ existieren Konzepte, bei denen die Vorlauftemperatur $\vartheta_V$ des Wärmeerzeugers mit Bezug auf eine maximale Vorlauftemperatur $\vartheta_V^{\text{Heizkruve}}$ aus der Heizkurve mit dem Ergebnis adaptiert wird, dass die Vorlauftemperatur $\vartheta_V$ abgesenkt wird. Hierzu gibt es unterschiedliche Verfahren, die in Regelungen mit freier (unbegrenzter) und Regelungen mit begrenzter Adaption einzuteilen sind. Speziell die Verfahren mit freier Adaption sind häufig unmittelbar an eine Raumtemperaturregeleinrichtung gekoppelt und besitzen somit einen Informationsverbund zwischen Raum und Wärmeerzeuger. Die genannten Verfahren fokussieren auf eine bedarfsgerechte Heizwärmeversorgung der Räume eines Gebäudes mit dem Ziel, die Vorlauftemperatur $\vartheta_V$ in dem Gebäude bedarfsgerecht und dabei möglichst niedrig einzustellen. Damit soll der Verbrauch und folglich der Endenergieeinsatz für die Raumheizung reduziert werden.

Der entscheidende Nachteil dieser technischen Lösung besteht darin, dass zwar der Energieeinsatz reduziert wird, jedoch im Hinblick auf den Wärmeerzeuger bei einer starken Absenkung der Vorlauftemperatur die Rücklauftemperatur in der Regel ansteigt, was zu einer Verschlechterung des energetischen Wirkungsgrades und daraus resultierend des Nutzungsgrades des Wärmeerzeugers führt.

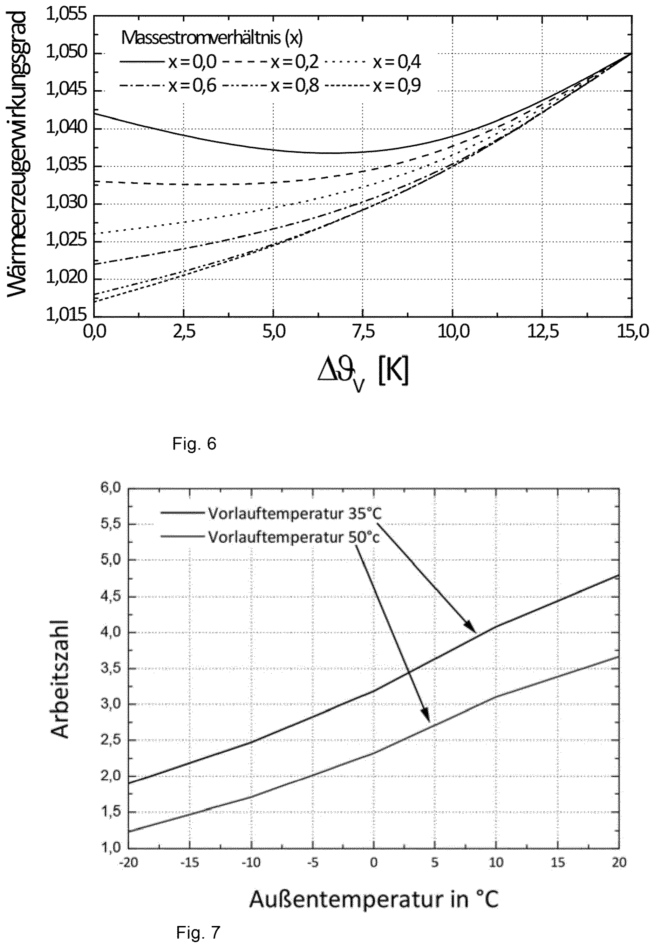

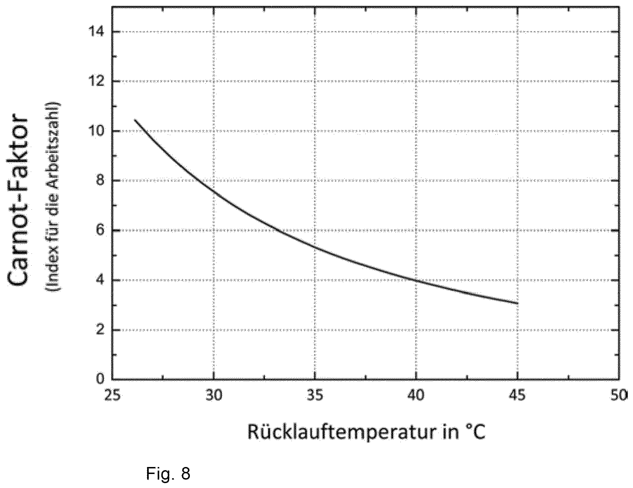

Das Optimum in Hinblick auf den Nutzungsgrad des Wärmeerzeugers kann jedoch nur realisiert werden, wenn niedrige Rücklauftemperaturen und möglichst geringe Vorlauftemperaturen vorliegen. Für eine beliebige Auswahl von Wärmeerzeugern sind signifikante Kennlinien den Fig. 5, 6 und 7 zu entnehmen. Fig. 5 zeigt den Wärmeerzeugerwirkungsgrad eines Brennwertkessels in Abhängigkeit der Rücklauftemperatur und des Modulationsbereiches (Brennerbelastung) und Fig. 6 zeigt den Wärmeerzeugerwirkungsgrad eines Brennwertkessels in Abhängigkeit der Vorlauftemperaturabsenkung und des Massestroms für eine Anlage mit Überströmventil. Unter dem Modulationsbereich, für den in Fig. 5 verschiedene Kurven dargestellt sind, versteht man die Anpassung der Brennerleistung des Gerätes auf die aktuell benötigte Leistung. Dies verringert die Taktfrequenz des Brennwertkessels deutlich. Typische Werte des unteren Modulationsbereiches sind 15 bis 30 %. Fig. 7 zeigt die Arbeitszahl einer Wärmepumpe in Abhängigkeit der Vorlauftemperatur, wobei hohe Arbeitszahlen einen hohen Wirkungsgrad bedeuten. Mit steigender Vorlauftemperatur werden deutlich geringere Arbeitszahlen erreicht. Auf der anderen Seite ist aus Fig. 7 deutlich der Einfluss der Außentemperatur zuerkennen. Mit steigender Außentemperatur steigen die Arbeitszahlen deutlich an. Einschränkend muss jedoch genannt werden, dass die Grafik typisch für das Verhalten einer Luft-Wasser- Wärmepumpe ist, die eine starke Abhängigkeit von der Außentemperatur aufweist. Nahezu gleiche Verläufe weist eine Grafik auf, die in Abhängigkeit der Rücklauftemperatur aufgezeichnet ist, da die Anlage bei Wärmepumpen mit einer konstanten Spreizung über dem Wärmeerzeuger betrieben wird. Unabhängig von der Art der Wärmequelle ist daher in Fig. 8 der Carnot-Faktor für einen Wärmepumpenprozess dokumentiert. Der Carnot-Faktor ist eine Bewertung des Kreisprozesses und beschreibt die Umwandlung von thermischer Energie in mechanische Energie (Arbeit). Das erstellte Diagramm basiert auf einer angenommenen Spreizung an den Wärmeübertragern von $\Delta\vartheta = 15\ K$. Der Carnot-Faktor beschreibt entsprechend den höchsten theoretisch möglichen Wirkungsgrad bei der Wärmeerzeugung bzw. des Kreisprozesses. Wie man erkennt, führen niedrige Rücklauftemperaturen zu einer signifikanten Verbesserung der Energieeffizienz. Daher ist zur Verbesserung des Wirkungs- oder Nutzungsgrades von Wärmeerzeugern eine niedrige Rücklauftemperatur anzustreben, was in der Regel mit steigenden Vorlauftemperaturen einhergeht. Bei Brennwertkesseln als Wärmeerzeugern ist dieser Zusammenhang besonders ausgeprägt.

Entgegen der theoretischen Erwartung wird in der Praxis mitunter beobachtet, dass keine Absenkung der zentralen Rücklauftemperatur bei Anhebung der Vorlauftemperatur zu verzeichnen ist, da hier eine gewisse Kompensation aufgrund der Überdimensionierung der Heizungsanlage erfolgt. Um auch für diese Fälle eine Steigerung des Nutzungsgrades realisieren zu können, muss die Vorlauftemperatur abgesenkt werden.

Aufgabe der vorliegenden Erfindung ist es, ein Verfahren zur Steigerung des Nutzungsgrads von Wärmeerzeugern vorzuschlagen, das in der Praxis unabhängig davon einsetzbar ist, ob bei sinkender Vorlauftemperatur eine steigende oder eine fallende Rücklauftemperatur auftritt und das mit üblichen, in der Heizkostenerfassung und/oder der Heizungsregelung gemessenen oder dort zur Verfügung stehenden Messgrößen umgesetzt werden kann. Gleichzeitig mit der Erhöhung des Nutzungsgrads sollen natürlich auch die geforderten wärmephysiologischen Verhältnisse innerhalb der beheizten Räume eingehalten werden (thermische Behaglichkeit). Insbesondere sollen von den Nutzern als nicht ausreichend beheizt angesehene Räume vermieden werden.

Diese Aufgabe wird durch ein Verfahren mit den Merkmalen des Anspruchs 1 und eine Steuereinrichtung mit den Merkmalen des Anspruchs 10 gelöst.

Im Rahmen des durchgeführten Verfahrens sind insbesondere die folgenden Verfahrensschritte vorgesehen, die nacheinander durchgeführt werden können:

(a) Messen der Vorlauftemperatur $\vartheta_V$ und der Rücklauftemperatur $\vartheta_R$ des Wärmeträger- bzw. Heizmediums in der Heizungsanlage, vorzugsweise im Vorlauf und Rücklauf der Heizungslage, bspw. im Anschlussbereich an den Wärmeerzeuger oder an anderen Positionen im Rohrkreislauf. Das Messen der Temperaturen kann einfach mittels an dem Vorlauf und dem Rücklauf angebrachter und bspw. mit der Steuereinrichtung verbundener Temperatursensoren erfolgen. Es können aber auch andere Sensoreinheiten verwendet werden, die im Rohrkreislauf angeordnet sind und diese Temperaturen messen bzw. Rückschlüsse auf diese Temperaturen zulassen, so dass diese ermittelt werden können. Dies hat den Vorteil, dass das Verfahren auch mit in einer Heizungsanlage bestehenden Sensoreinheiten einfach realisiert werden kann.

(b) Bestimmen eines Versorgungszustandswerts GVZ, welcher den durch die Heizungsanlage zu deckenden Wärmebedarf der an den Rohrkreislauf der Heizungsanlage angeschlossenen Wärmeverbraucher anzeigt, und Überprüfen, ob der Versorgungszustandswert GVZ innerhalb eines vordefinierten Wertebereichs liegt, welcher eine Absenkung der Vorlauftemperatur erlaubt, ohne dass die Heizungsanlage einen Unterversorgungszustand aufweist bzw. in einen Unterversorgungszustand kommt. Wenn der Versorgungszustandswert GVZ nicht innerhalb des vordefinierten Wertebereichs liegt, werden die nachfolgenden Verfahrensschritte erfindungsgemäß vorzugsweise nicht ausgeführt. Mit anderen Worten erfolgt das nachfolgend beschriebene Absenken der Vorlauftemperatur nur, wenn der Versorgungszustandswert GVZ innerhalb des vordefinierten Wertebereichs liegt. Erfindungsgemäß ist in einer Variante des Verfahrens denkbar, dass die Vorlauftemperatur $\vartheta_V$ um ein Vorlauftemperaturinkrement $\Delta\vartheta_{V,ink}$ erhöht wird, wenn der Versorgungszustandswert GVZ außerhalb des vordefinierten Wertebereichs liegt, dass eine Änderungszeitspanne abgewartet wird und dass das Verfahren mit dem Verfahrensschritt (a) fortgesetzt wird.

(c) Absenken der Vorlauftemperatur $\vartheta_V$ um ein vorbestimmtes Vorlauftemperaturdekrement $\Delta\vartheta_{V,dek}$ (im Sinne einer Vorlauftemperaturänderung $\Delta\vartheta_V$) und Abwarten einer Änderungszeitspanne, welche derart bemessen ist, dass das Ändern der Vorlauftemperatur $\vartheta_V$ messbare Auswirkungen in der Heizungsanlage, insbesondere Auswirkungen bei der Rücklauftemperatur $\vartheta_R$ und/oder dem Versorgungszustandswert GVZ, zeigt bzw. zeigen müsste, wenn solche Auswirkungen erzeugt werden. Je nach Größe und Art der Heizungsanlage kann eine sinnvoll bemessene Änderungszeitspanne zwischen 10 Minuten und 120 Minuten liegen. Entsprechend nachstehend noch erläuterter Kriterien kann der Fachmann eine Änderungszeitspanne erfindungsgemäß sinnvoll festlegen, auch außerhalb der vorstehenden Zeitspanne und/oder dynamisch anhand von Messkriterien.

(d) Messen der Rücklauftemperatur $\vartheta_R$ und Bestimmen der Rücklauftemperaturänderung $\Delta\vartheta_R$ nach der Änderung der Vorlauftemperatur $\vartheta_V$. Zusammen mit der Rücklauftemperatur $\vartheta_R$ kann erfindungsgemäß auch die Vor lauftemperatur $\vartheta_V$ gemessen werden, bspw. um zu überprüfen, ob das Vorlauftemperaturdekrement $\Delta\vartheta_{V,dek}$ oder ein Vorlauftemperaturinkrement $\Delta\vartheta_{V,ink}$ in der Heizungsanlange korrekt umgesetzt wurde oder um die aktuelle Vorlauftemperatur $\vartheta_V$ als Messwert zu erhalten.

(e) Bestimmen eines Versorgungszustandswerts GVZ nach der Änderung der Vorlauftemperatur $\vartheta_V$.

(f) Überprüfen, ob die Rücklauftemperaturänderung $\Delta\vartheta_R$ kleiner Null ist, d.h. die Rücklauftemperatur $\vartheta_R$ sinkt, und ob der Versorgungszustandswert GVZ innerhalb des vordefinierten Wertebereichs liegt, wobei das Verfahren in diesem Fall mit dem Verfahrensschritt (c) fortgesetzt wird. Weil mit Sinken der Rücklauftemperatur $\vartheta_R$ auch der Nutzungsgrad des Wärmeerzeugers steigt, kann durch Wiederholen einer weiteren Absenkung des Vorlauftemperatur $\vartheta_V$ um vorzugsweise ein weiteres Vorlauftemperaturdekrement $\Delta\vartheta_{V,dek}$ versucht werden, den Nutzungsgrad des Wärmeerzeugers weiter zu erhöhen. Dies erfolgt dann in einem weiteren Verfahrenszyklus.

(g) Überprüfen, ob die Rücklauftemperaturänderung $\Delta\vartheta_R$ größer Null ist, d.h. die Rücklauftemperatur steigt, wobei in diesem Fall die Vorlauftemperatur $\vartheta_V$ um ein Vorlauftemperaturinkrement $\Delta\vartheta_{V,ink}$ angehoben wird, eine Änderungszeitspanne abgewartet wird und das Verfahren mit dem Verfahrensschritt (d) fortgesetzt wird. Optional kann in diesem Schritt auch geprüft werden, ob der Versorgungszustandswert GVZ innerhalb des vordefinierten Wertebereichs liegt. Wäre dies nicht der Fall, würde zum Gegensteuern auch die Vorlauftemperatur $\vartheta_V$ entsprechend erhöht, so dass auf diese Prüfung verzichtet werden kann. Diese Prüfung macht aber dann Sinn, wenn für den Fall, dass der Versorgungszustandswert GVZ außerhalb des vordefinierten Wertebereichs des Versorgungszustandswerts GVZ liegt, ein größeres Vorlauftemperaturinkrement $\Delta\vartheta_{V,ink}$ angewendet werden soll. Dann führt diese Prüfung dazu, dass auch der nachfolgende Schritt noch ausgeführt würde, der für diesen Fall eine Vorlauftemperaturerhöhung vorsieht.

(h) Überprüfen, ob der Versorgungszustandswert GVZ außerhalb des vordefinierten Wertebereichs liegt, wobei in diesem Fall die Vorlauftemperatur $\vartheta_V$ um ein Vorlauftemperaturinkrement $\Delta\vartheta_{V,ink}$ angehoben wird, eine Änderungszeitspanne abgewartet wird und das Verfahren mit dem Verfahrensschritt (d) fortgesetzt wird. In diesem Fall kann das Vorlauftemperaturinkrement $\Delta\vartheta_{V,ink}$ optional erfindungsgemäß größer gewählt werden als in dem vorbeschrieben Schritt (g).

In einem zusätzlichen Verfahrensschritt (i) kann erfindungsgemäß überprüft werden, ob die Rücklauftemperatur ($\vartheta_R$) größer als eine vorgegebene minimale Rücklauftemperatur ($\vartheta_{R,min}$) ist. Wenn dies nicht der Fall ist, d.h. die Rücklauftemperatur ($\vartheta_R$) kleiner als die vorgegebene minimale Rücklauftemperatur ($\vartheta_{R,min}$) ist, dann werden im Rahmen dieses Verfahrensschritts die Vorlauftemperatur ($\vartheta_V$) um ein Vorlauftemperaturinkrement ($\Delta\vartheta_{V,ink}$) angehoben, eine Änderungszeitspanne abgewartet und das Verfahren mit dem Verfahrensschritt (d) fortgesetzt, d.h. mit dem Messen der Rücklauftemperatur ($\vartheta_R$) und Bestimmen der Rücklauftemperaturänderung ($\Delta\vartheta_R$) sowie den dann folgenden Schritten. Dieser Verfahrensschritt ist insbesondere dann sinnvoll, wenn für den Betrieb des Wärmeerzeugers notwendig ist, eine bestimmte Mindestrücklauftemperatur, d.h. eine minimale Rücklauftemperatur ($\vartheta_{R,min}$), einzuhalten. Eine solche minimale Rücklauftemperatur ($\vartheta_{R,min}$) wird insbesondere durch einen Hersteller des Wärmeerzeugers vorgeschrieben.

Die Verfahrensschritte (a) und (b) sowie (d) und (e) sowie (f) und (g) und (h) und (i) können in ihrer Reihenfolge erfindungsgemäß jeweils auch getauscht werden. Mit anderen Worten kann Verfahrensschritt (b) vor Verfahrensschritt (a), Verfahrensschritt (e) vor Verfahrensschritt (d), Verfahrensschritt (h) vor einem oder beiden der Verfahrensschritte (f) oder (g) und/oder Verfahrensschritt (f) nach einem oder beiden der Verfahrensschritte (f) oder (g) durchgeführt werden. Entsprechendes gilt für den Verfahrensschritt (i).

Wenn Verfahrensschritt (h) vorgezogen wird, kann eine explizite Überprüfung des Versorgungszustandswerts GVZ in den Verfahrensschritten (f) und/oder (g) auch jeweils unterbleiben, weil diese Verfahrensschritte nur dann erreicht werden, wenn der Versorgungszustandswert GVZ innerhalb des vordefinierten Wertebereichs liegt. Insofern kann die Überprüfung des Versorgungszustandswerts GVZ in den Verfahrensschritten (f) und/oder (g) auch jeweils implizit erfolgen, bspw. durch ein Vorziehen des Verfahrensschritts (h).

Als Versorgungszustandswert GVZ im Sinne der Erfindung wird eine ermittelte Größe verstanden, die den Wärmebedarf in einem Gebäude definiert. Anhand dieser Größe kann dann entschieden werden, ob das Gebäude ausreichend und angemessen mit Heizwärme versorgt wird, ein Überangebot an Heizwärme zur Verfügung gestellt wird (Überversorgungszustand) oder ein Unterangebot an Heizwärme herrscht (Unterversorgungszustand). Ein Unterversorgungszustand korreliert also mit einem Unterangebot an Heizwärme und wird von den Bewohnern als thermischer Diskomfort wahrgenommen. Ein solcher Zustand soll vermieden werden. Dies kann dadurch überprüft werden, dass festgesellt wird, ob der Versorgungszustandswert innerhalb eines vordefinierten Wertebereichs liegt, bspw. also oberhalb oder unterhalb eines Schwellwertes des Versorgungszustandswerts GVZ, der die Grenze zu einem Unterversorgungszustand angibt. Eine solche Grenze bzw. der vordefinierte Wertebereich können empirisch ermittelt werden. Nähere Erläuterungen zu bevorzugten Ausführungsbeispielen für die Ermittlung des Versorgungszustandswerts werden nachfolgend noch gegeben.

Die Änderungszeitspanne, welche in dem System nach einer Vorlauftemperaturerhöhung oder Vorlauftemperaturabsenkung gewartet wird, damit die Auswirkungen dieser Temperaturänderung im System detektierbar sind, kann gemäß einer einfachen Ausführungsform der Erfindung eine vorgegebene Zeit sein, die in dem System fest eingestellt ist. Diese kann bspw. für alle Heizungsanlagen gleich in der Steuereinrichtung vorgegeben sein. Es ist auch denkbar, die vorgegebene Zeit alternativ auch bspw. als parametrierbaren Wert in der Steuereinrichtung vorzugeben, so dass die Änderungszeitspanne an die jeweilige Heizungsanlage angepasst werden kann.

Andererseits kann die Änderungszeitspanne bspw. auch als Funktion bestimmter Eingangsgrößen, insbesondere des absoluten oder relativen Vorlauftemperaturdekrements oder Vorlauftemperaturinkrements $\Delta\vartheta_{V,dek}$, $\Delta\vartheta_{V,ink}$, ermittelt werden. Hintergrund der Änderungszeitspanne ist, dass diese durch den Fachmann in der Weise festgelegt wird, dass sich die Heizungsanlage nach Anwenden der Vorlauftemperaturänderung $\Delta\vartheta_V$ im Sinne eines Vorlauftemperaturdekrements oder Vorlauftemperaturinkrements $\Delta\vartheta_{V,dek}$, $\Delta\vartheta_{V,ink}$ wieder in einem stationären oder quasi-stationären Zustand befindet.

Ein solcher stationärer oder quasi-stationärer Zustand der Heizungsanlage kann insbesondere dadurch gekennzeichnet sein, dass sich die Beobachtungsgrößen Rücklauftemperatur $\vartheta_R$ und/oder Versorgungszustandswert GVZ nach dem Anwenden des Vorlauftemperaturdekrements $\Delta\vartheta_{V,dek}$ oder des Vorlauftemperaturinkrements $\Delta\vartheta_{V,ink}$ nach einer Phase der Änderung über einen definierten Zeitraum innerhalb vordefinierter Toleranzen nicht ändern. Diese Toleranzen sind vorzugsweise einstellbar und können durch den Fachmann bspw. empirisch ermittelt und in der Steuereinrichtung eingegeben werden. Es ist auch denkbar, diese Toleranzen in der Steuereinrichtung fest und unveränderlich, bspw. aufgrund von typischen Erfahrungswerten, vorzugeben. Vor diesem Hintergrund ist es auch möglich, den Temperaturverlauf bspw. der Rücklauftemperatur nach Anwenden des Vorlauftemperaturdekrements zu bestimmen und die zeitliche Änderung der Rücklauftemperatur zu ermitteln. Ein stationärer oder quasi-stationärer Zustand der Heizungsanlage wird in einem solchen Fall erfindungsgemäß bspw. dann angenommen, wenn die Änderung der Rücklauftemperatur unter einem Toleranzschwellwert liegt, der vorzugsweise in der Größenordnung der Schwankungsbreite der Messwerte liegt. Wenn dieser Zustand erreicht ist, wird die Änderungszeitspanne, welche mit dem Anwenden des Vorlauftemperaturdekrements beginnt, beendet. Dies entspricht einem dynamischen Festlegen der Änderungszeitspanne.

Alternativ oder zusätzlich kann in vergleichbarer Weise auch ein Verlauf des Versorgungszustandswerts bestimmt und dessen zeitliche Änderung ermittelt werden. Auch hieraus ergibt sich in analoger Weise ein stationärer oder quasi-stationärer Zustand, über dessen Feststellen die Änderungszeitspanne beendet wird. Auch eine Kombination beider Verläufe (Temperaturverlauf der Rücklauftemperatur und Verlauf des Versorgungszustandswerts) kann als Kriterium herangezogen werden.

Die Änderungszeitspanne kann erfindungsgemäß nach dem Anwenden des Vorlauftemperaturdekrements $\Delta\vartheta_{V,dek}$ bzw. Vorlauftemperaturinkrements $\Delta\vartheta_{V,ink}$ oder nach Erreichen der geänderten Vorlauftemperatur $\vartheta_V$ beginnen. Erfindungsgemäß kann das Verfahren (bzw. können die einzelnen Verfahrensschritte) während des Heizbetriebs der Heizungsanlage durchgeführt werden. Das Verfahren kann quasi kontinuierlich durchgeführt werden, d.h. die vorbeschriebenen Verfahrenszyklen werden nacheinander immer wieder wiederholt.

Eine solche quasi kontinuierliche Durchführung bedeutet, dass das Verfahren erst beendet wird, wenn der Heizbetrieb der Heizungsanlage endet. Zwischen den einzelnen, vorzugsweise zwischen bestimmten, Verfahrensschritten können jedoch größere Pausen eingelegt werden. Pausen bieten sich erfindungsgemäß insbesondere dann an, wenn bspw. in zwei aufeinander folgenden Verfahrenszyklen ein Wechsel zwischen einer positiven und einer negativen Rücklauftemperaturreaktion oder ein Wechsel von einem Versorgungszustandswert GVZ innerhalb des vordefinierten Wertebereichs zu einem Versorgungszustandswert GVZ innerhalb des vordefinierten Wertebereichs stattfindet. Beides deutet darauf hin, dass für den aktuellen Arbeitspunkt eine optimale Vorlauftemperatureinstellung für das Betreiben der Heizungsanlage unter dem Gesichtspunkt der Maximierung des Nutzungsgrads des Wärmeerzeugers gefunden wurde.

Ein Verfahrenszyklus soll erfindungsgemäß dadurch definiert sein, dass ein Verfahrenszyklus mit einem Sprung zu einem vorherigen Verfahrensschritt endet. Während des dann folgenden Verfahrenszyklus werden die Verfahrensschritte konsekutiv in der beschriebenen oder in Anspruch 1 beanspruchten Reihenfolge abgearbeitet, bis der Verfahrenszyklus durch einen erneuten Sprung beendet wird.

Eine größere Pause ist definiert als eine Unterbrechung des Verfahrens zwischen zwei Verfahrensschritten, die länger dauert als eine Änderungszeitspanne. Die größere Pause kann bspw. das 3- bis 10-fache einer Änderungszeitspanne betragen. Hierdurch wird ein zu häufiger Nachregelbedarf des Gesamtsystems, insbesondere einer Heizungsregelung oder einer Raumtemperaturregelung, vermieden. Eine Änderungszeitpanne in typischen Heizungsanlagen kann häufig in der Größenordnung zwischen 10 und 120 Minuten liegen, ohne dass die Erfindung auf diese Größenordnung beschränkt ist. Eine Änderungszeitspanne kann durch den Fachmann für jede Heizungsanlage bspw. durch die beschriebenen Messungen ermittelt werden; die größere Pause kann sich dann vorzugsweise durch die 3- bis 10-fache Zeitdauer ergeben.

In einer einfachen Ausführungsform der Erfindung kann das Vorlauftemperaturdekrement $\Delta\vartheta_{V,dek}$ als fest vorbestimmter Wert festgelegt und bspw. in der Steuereinrichtung hinterlegt sein. Erfindungsgemäß bevorzugt ist es jedoch, wenn das Vorlauftemperaturdekrement $\Delta\vartheta_{V,dek}$, insbesondere vor jeder Anwendung, aus der aktuellen berechneten oder gemessenen Vorlauftemperatur $\vartheta_V$ und einer in der Heizungsanlage vorgegebenen minimalen Vorlauftemperatur $\vartheta_{V,min}$ berechnet wird. Dazu kann insbesondere die vorgegebene minimale Vorlauftemperatur $\vartheta_{V,min}$ von der aktuellen Vorlauftemperatur $\vartheta_V$ abgezogen und die Differenz mit einem Dekrement-Parameter (*Param*) mit einem Wert zwischen 0 und 1 multipliziert werden. Ein bevorzugter Wert des Dekrement-Parameters (*Param*) liegt zwischen 0,025 und 0,1, bspw. bei 0,05. Durch eine solche Bestimmung des Vorlauftemperaturdekrements $\Delta\vartheta_{V,dek}$ wird verhindert, dass die aktuelle Vorlauftemperatur $\vartheta_V$ unter eine durch die Heizungsanlage vorgegebene minimale Vorlauftemperatur $\vartheta_{V,min}$ fällt, die im operativen Betrieb nicht unterschritten werden sollte, weil die Heizungsanlage und der Wärmeerzeuger nicht für einen operativen Betrieb unter einer vorgegebenen minimalen Vorlauftemperatur $\vartheta_{V,min}$ ausgelegt sind.

Das Vorlauftemperaturdekrement $\Delta\vartheta_{V,dek}$ und das Vorlauftemperaturinkrement $\Delta\vartheta_{V,ink}$ können erfindungsgemäß gleich sein. Die Erfindung kann jedoch auch umgesetzt werden, wenn Vorlauftemperaturdekrement $\Delta\vartheta_{V,dek}$ und Vorlauftemperaturinkrement $\Delta\vartheta_{V,ink}$ verschieden sind.

Eine erfindungsgemäß besonders bevorzugte Bestimmung des Vorlauftemperaturinkrements $\Delta\vartheta_{V,ink}$ sieht vor, dass das Vorlauftemperaturinkrement $\Delta\vartheta_{V,ink}$ in Abhängigkeit von dem Versorgungszustandswert GVZ ermittelt wird. Bspw. kann das Vorlauftemperaturinkrement $\Delta\vartheta_{V,ink}$ gleich dem Vorlauftemperaturdekrement $\Delta\vartheta_{V,dek}$ gewählt werden, solange der Versorgungszustandswert GVZ innerhalb des vordefinierten Wertebereichs liegt. Wenn der Versorgungszustandswert GVZ außerhalb des vordefinierten Wertebereichs liegt, welcher dann erfindungsgemäß vorzugsweise eine Unterversorgung der Heizungsanlage mit Wärme oder mit anderen Worten einen zusätzlichen Wärmebedarf anzeigt, kann das Vorlauftemperaturinkrement $\Delta\vartheta_{V,ink}$ bspw. proportional zu dem Betrag der Differenz des aktuellen Versorgungszustandswerts GVZ zu dem Versorgungszustandsgrenzwert, bspw. einem minimalen Versorgungszustandswert $GVZ_{min}$ gewählt werden, um durch das Vorlauftemperaturinkrement $\Delta\vartheta_{V,ink}$ möglichst schnell wieder zu einem Arbeitspunkt der Heizungsanlage zu kommen, bei dem der Versorgungszustandswert GVZ innerhalb des vordefinierten Wertebereichs liegt. Der Versorgungszustandsgrenzwert gibt vorzugsweise den Grenzwert zwischen dem vordefinierten Wertebereich und Werten des Versorgungszustandswerts GVZ außerhalb dieses Wertebereichs an.

Erfindungsgemäß kann ergänzend oder alternativ auch vorgesehen werden, dass das Vorlauftemperaturinkrement $\Delta\vartheta_{V,ink}$ so gewählt wird, dass die Vorlauftemperatur $\vartheta_V$ nach Anwendung des Inkrements $\Delta\vartheta_{V,ink}$ die durch eine außentemperaturgeführte Heizkurve der Heizungsanlage vorgegebenen Vorlauftemperatur $\vartheta_V^{Heizkurve}$ als maximale Vorlauftemperatur $\Delta\vartheta_{V,max}$ nicht überschreitet. Die maximale Vorlauftemperatur $\Delta\vartheta_{V,max}$ kann jedoch auch anders, bspw. als heizungsanlagenspezifischer Grenzwert, vorgegeben sein. In diesem Fall kann das Vorlauftemperaturinkrement $\Delta\vartheta_{V,ink}$ aus der Differenz der maximale Vorlauftemperatur $\Delta\vartheta_{V,max}$ und der aktuellen Vorlauftemperatur $\vartheta_V$, multipliziert mit einem Parameter *Param,* ermittelt werden. Der Parameter *Param* kann genauso gewählt sein wie im Falle des Vorlauftemperaturdekrements $\Delta\vartheta_{V,dek}$. Diese Berechnung hat den Vorteil, implizit auch die Abhängigkeit von dem Versorgungszustandswert GVZ zu berücksichtigen, weil sich der Versorgungszustandswert GVZ mit sinkender Vorlauftemperatur $\vartheta_V$ in Richtung einer Unterversorgung der Heizungsanlage bewegt und im Falle einer echten Unterversorgung der Abstand der Vorlauftemperatur $\vartheta_V$ von der maximalen Vorlauftemperatur $\Delta\vartheta_{V,max}$ am größten ist. Damit ist im Falle der Unterversorgung in der Heizungsanlage das Vorlauftemperaturinkrement $\Delta\vartheta_{V,ink}$ groß und bewirkt eine schnelle Beendigung des Unterversorgungszustands. Anders ausgedrückt kehrt der Versorgungszustandswert GVZ durch eine hohes Vorlauftemperaturinkrement $\Delta\vartheta_{V,ink}$ rasch in den vordefinierten Wertebereich zurück.

Der Versorgungszustandswert GVZ kann erfindungsgemäß aus Versorgungszuständen von vorzugsweise allen in dem Rohrkreislauf der Heizungsanlage angeordneten Wärmeverbrauchern ermittelt werden, wobei der Versorgungszustand eines Wärmeverbrauchers den zusätzlichen positiven oder negativen Wärmebedarf des Wärmeverbrauchers anzeigt und mit dem Volumenstrom und/oder Temperaturen des den Wärmeverbraucher durchströmenden Wärmeübertragungsmediums über Kennlinien oder analytische Berechnungsverfahren korreliert ist. Vorzugsweise kann der Volumenstrom dabei ins Verhältnis zu dem maximalen Nennvolumenstrom durch den Wärmeverbraucher gesetzt werden.

Ein Wärmeverbraucher kann im Rahmen dieser Offenbarung insbesondere ein Heizkörper oder eine Fußbodenheizung sein, welche die durch das Wärmeübertragungsmedium (in der Regel Warmwasser) angebotene Wärmeleistung insbesondere an Räume abgeben kann, um diese auf eine gewünschte Raumtemperatur zu bringen. Dazu sind die Räume üblicher Weise mit einer Raumtemperaturregelung ausgestattet, die einfacher Weise ein handbetätigtes Thermostatventil sein kann. Das Thermostatventil regelt den Volumenstrom durch den Heizkörper respektive Wärmeverbraucher.

Wenn ein Wärmeverbraucher mit einem relativ niedrigen Volumenstrom (bezogen auf den maximal möglichen (Nenn-)Volumenstrom) durchströmt wird, deutet dies darauf hin, dass kein großer zusätzlicher Wärmebedarf für den Heizkörper (bzw. allgemeiner Wärmeverbraucher) besteht. Entsprechend ist der Versorgungszustand des Wärmeverbrauchers hoch, d.h. es liegt keine Unterversorgung des Wärmeverbrauchers vor. Ein besonders niedriger Volumenstrom weist vielmehr darauf hin, dass dieser Wärmeverbraucher sogar überversorgt ist, weil er nur einen sehr kleinen Teil der angebotenen Wärme aufnimmt.

Wird ein Wärmeverbraucher dagegen mit einem relativ hohen Volumenstrom (bezogen auf den maximal möglichen (Nenn-)Volumenstrom) bzw. dem maximalen Volumenstrom durchströmt, zeigt dies einen hohen zusätzlichen Wärmebedarf für den Heizkörper (bzw. allgemeiner Wärmeverbraucher) an, weil nahezu die gesamte durch das Wärmeübertragungsmedium angebotene Wärmeleistung aufgenommen wird. In diesem Fall liegt ein deutlicher Unterversorgungszustand des Wärmeverbrauchers vor.

Das Ermitteln des aufgrund des vorbeschriebenen Zusammenhangs zumindest implizit mit dem Volumenstrom korrelierten Versorgungszustands für einen Wärmeverbraucher kann auf verschiedene Arten erfolgen.

Eine Vielzahl von Wärmeverbrauchern ist mit einer elektronischen Einzelraumregelung ausgestattet, welche den Volumenstrom durch den Wärmeverbraucher über elektrisch angesteuerte Stellventile ansteuert. Dies kann bspw. für Heizkörper oder Fußbodenheizungen als Wärmeverbraucher gelten. In diesem Fall kann aus den Ventilstellungen der Stellventile auf den Volumenstrom durch die Wärmeerzeuger geschlossen und daraus über bspw. empirisch ermittelte Kennlinien für die jeweiligen Typen der Wärmeerzeuger der Versorgungszustand für den Wärmeverbraucher bestimmt werden. Ebenso sind lokale Versorgungspumpen beziehungsweise dezentrale Umwälzpumpen bekannt, mit denen der Versorgungszustand für den Wärmeverbraucher bestimmt werden kann. Bei Systemen mit dezentralen Versorgungspumpen, wie sie bspw. in der EP 1 752 852 offenbart sind, wird raumtemperaturabhängig die Durchflussmenge durch den Heizkörper geändert, was im Wesentlichen durch eine Änderung der Drehzahl einer derartigen Pumpe bzw. der Änderung der elektrischen Leistungsaufnahme erfolgen kann. Eine derartige, dezentral angeordnete Pumpe übernimmt in solchen Heizungssystemen dementsprechend die Aufgabe eines bislang an dieser Stelle vorgesehenen Ventils, z. B. Thermostatventils. Über die aktuelle Drehzahl jeder dezentralen Versorgungspumpe kann auf den Versorgungszustandswert geschlossen werden.

Es ist auch möglich, aus Heizkörper-Temperaturwerten (im Falle eines Heizkörpers als Wärmeverbraucher) auf den Volumenstrom des Wärmeübertragungsmediums in dem Wärmeverbraucher (insbesondere einem Heizkörper) bzw. auch unmittelbar auf den Versorgungszustand des Wärmeverbrauchers mittels bspw. empirisch ermittelten Kennlinien zurückzuschließen. Dazu werden insbesondere eine Heizkörperoberflächentemperatur und eine Heizkörpervorlauftemperatur oder eine Heizkörpervorlauftemperatur und eine Heizkörperrücklauftemperatur als Heizkörper-Temperaturwerte ermittelt. Durch Differenzbildung mit der Heizkörper-Umgebungslufttemperatur werden entsprechende Übertemperaturen berechnet. Diese können - unter Verwendung weiterer Kenngrößen des Heizkörpers und einem auf physikalischen Gesetzmäßigkeiten beruhenden Heizkörpermodell - in einen Volumenstrom des Heizkörpers umgerechnet werden. Diese Heizkörpermodelle und die physikalischen Gesetzmäßigkeiten sind dem Fachmann aus der Heizkostenerfassung mittels Heizkostenverteilern bekannt und müssen daher an dieser Stelle nicht mehr ausführlich beschrieben werden. Zur Messung der Temperaturwerte können herkömmliche, an der Oberfläche der Heizkörper angebrachte Heizkostenverteiler verwendet werden.

Ferner ist es möglich, den Volumenstrom (pro Zeiteinheit) durch die Wärmeverbraucher direkt zu messen, wie dies bspw. bei Fußbodenheizungen mittels Wärmemengenzählern üblich ist. Dieser gemessene Volumenstrom kann dann direkt über eine bspw. empirisch ermittelte Kennlinie in einen Versorgungszustand des Wärmeverbrauchers umgewandelt werden. Auch dies ist dem Fachmann bekannt und muss daher an dieser Stelle nicht ausführlicher beschrieben werden.

Die zuvor beschriebenen Ermittlungen der Versorgungszustände stellen dem Fachmann bspw. aus der EP 1 456 727 B1, der EP 1 933 220 B1 oder der EP 1 645 928 B1 bekannte Technologien dar.

Aus den einzelnen Versorgungszuständen der Wärmeverbraucher, die auch als Heizflächenversorgungszustände bezeichnet werden, wird dann ein Versorgungszustandswert GVZ für die Heizungsanlage ermittelt, der sich auf die gesamte Heizungsanlage eines Gebäudes oder auch nur ggf. separate Heizkreise der Heizungsanlage beziehen kann. Der den thermischen Versorgungszustand anzeigende Versorgungszustandswert GVZ wird daher auch als Heizkreis- oder Gebäudeversorgungszustand bezeichnet.

Eine besonders einfache Ermittlung eines Versorgungszustandswerts GVZ aus den einzelnen Versorgungszuständen der Wärmeverbraucher besteht darin, die einzelnen Versorgungszustände ggf. gewichtet zu mitteln. Das Ergebnis dieser Mittelung kann dann den Versorgungszustandswert GVZ für die Heizungsanlage (Gebäude- oder Heizkreisversorgungszustand) bilden. Anstelle der Mittelung kann durch den Fachmann auch ein geeigneter anderer funktionaler Zusammenhang verwendet werden.

Eine verbesserte Möglichzeit zur Ermittlung des Versorgungszustandswerts GVZ sieht vor, die Versorgungszustände der Wärmeverbraucher jeweils nach Unterversorgungszuständen und nach Überversorgungszuständen zu bewerten und separat zu mitteln, so dass es einen mittleren Überversorgungszustand der (überversorgten) Wärmeverbraucher der Heizungsanlage und einen mittleren Unterversorgungszustand der (unterversorgten) Wärmeverbraucher der Heizungsanlage gibt. Die Mittelung kann als arithmetische oder gewichtete Mittelung durchgeführt werden.

Die gemittelten Über- und Unterversorgungszustände werden dann in einer Fuzzy-Logik bewertet. Dazu werden die Über- und Unterversorgungszustände mittels Fuzzy-Zugehörigkeitsfunktionen bewertet, indem die Über- und Unterversorgungszustände bestimmten Funktionswerten von Fuzzy-Variablen zugewiesen werden. Im konkreten Beispiel bieten sich bspw. linguistische Fuzzy-Variablen (wie "hohe Unterversorgung", "mittlere Unterversorgung", "geringe Unterversorgung, "korrekte Versorgung", "geringe Überversorgung", "mittlere Überversorgung", "hohe Überversorgung") an, denen je nach Mittelwert (bspw. über eine Kennlinie oder einen funktionalen Zusammenhang) bestimmte Funktionswerte zugeordnet werden. Aus diesen Funktionswerten werden dem zu ermittelnden Versorgungszustandswert GVZ mittels Fuzzy-Regeln jeweils einer Regel zugeordnete Versorgungszustandswerte $GVZ_j$ mit ihrem jeweiligen Erfüllungsgrad $\eta_j$ ermittelt, wobei der Laufindex j die Anzahl der Regeln angibt. Die einer Regel mit ihrem jeweiligen Erfüllungsgrad $\eta_j$ zugeordneten Versorgungszustandswerte $GVZ_j$ werden bei einer abschließenden Defuzzifizierung bspw.
über eine Schwerpunktbildung in den Versorgungszustandswert GVZ umgerechnet.

Die Anwendung der Fuzzy-Logik hat den Vorteil, dass mathematisch geschlossen nur schlecht beschreibbare Kriterien (wie bspw. auch ein gefühlter thermischer Diskomfort) mit in die Berechnung des Versorgungszustandswerts GVZ eingehen können, indem dafür geeignete Regeln definiert werden. Das Auffinden geeigneter Regeln wird der Fachmann im Rahmen seines Fachwissens vornehmen, bspw. in Anlehnung an die Anwendung der Fuzzy-Logik auch für diesen Anwendungsfall, die bereits aus der EP 1 456 727 B1 bekannt ist.

Die vorstehend beschriebene Ermittlung des Versorgungszustandswerts GVZ stellt eine im Zusammenhang mit dem beschriebenen Verfahren besonders bevorzugte Methode dar.

In einer weiteren, besonders bevorzugten Methode zur Ermittlung des Versorgungszustandswerts GVZ kann der Versorgungszustandswert als Heizleistungsreserve HLR oder als Betriebsleistungsverhältnis BLV verstanden werden.

Die Heizleistungsreserve HLR eines Wärmeverbrauchers ist definiert als Größe, welche die Differenz zwischen der Wärmeleistung bei aktueller Vorlauftemperatur $\vartheta_V$ am Heizkörper und Nennmassenstrom $\dot{Q}_{100}(\vartheta_V)$ und der aktuellen Wärmeleistung (bei der aktuellen Vorlauftemperatur $\vartheta_V$ am Heizkörper) $\dot{Q}_{akt}(\vartheta_V)$ in das Verhältnis zu der Wärmeleistung bei aktueller Vorlauftemperatur und Nennmassenstrom $\dot{Q}_{100}(\vartheta_V)$ setzt:

$$HLR = \frac{\dot{Q}_{100}(\vartheta_V) - \dot{Q}_{akt}(\vartheta_V)}{\dot{Q}_{100}(\vartheta_V)} = 1 - \frac{\dot{Q}_{akt}(\vartheta_V)}{\dot{Q}_{100}(\vartheta_V)} \cong 1 - \left(\frac{\Delta_{Log}}{\Delta_{Log,100}}\right)^{n\_HK}$$

wobei

$\Delta_{Log}$ die aktuelle logarithmische Übertemperatur (bei aktueller Vorlauftemperatur);
$\vartheta_{Log,100}$ die logarithmische Übertemperatur bei Nennmassestrom (und bei aktueller Vorlauftemperatur); und
n_HK der Exponent des Wärmeverbrauchers (bspw. Heizkörper)

sind.

Die aktuelle logarithmische Übertemperatur $\Delta_{Log}$ ist definiert als

$$\Delta_{Log} = \frac{\Delta\vartheta_V - \Delta\vartheta_R}{\ln(\Delta\vartheta_V) - \ln(\Delta\vartheta_R)} = K_{CW} \cdot K_{CL} \cdot \Delta_{HKV}$$

wobei

$\Delta\vartheta_V = \vartheta_V - \vartheta_L$     die Vorlaufübertemperatur des Heizkörpers;
$\Delta\vartheta_R = \vartheta_R - \vartheta_L$     die Rücklaufübertemperatur des Heizkörpers;
$\vartheta_V$     die Vorlauftemperatur am Heizkörper;
$\vartheta_R$     die Rücklauftemperatur am Heizkörper;
$\vartheta_L$     die Umgebungslufttemperatur am Heizkörper;

sind. Diese Größen können durch geeignete Sensoren gemessen und aus den Messwerten errechnet werden.

Im Falle eines an dem Heizkörper angebrachten 2-Fühler Heizkostenverteilers wird die aktuelle logarithmische Übertemperatur $\Delta_{Log}$ aus der Übertemperatur $\Delta_{HKV}$ des Heizkostenverteilers ermittelt, wie sich auch aus der vorstehenden Gleichung ergibt. Dabei sind

$\Delta_{HKV} = \vartheta_{HKS} - \vartheta_{RLS}$      die Heizkostenverteiler-Übertemperatur;
$\vartheta_{HKS}$      die heizkörperseitige Temperatur des Heizkostenverteilers;
$\vartheta_{RLS}$      die raumluftseitige Temperatur des Heizkostenverteilers;
$K_{CW}$      wasserseitiger Korrekturfaktor des Heizkörpers entsprechend der DIN 834; und
$K_{CL}$      raumluftseitiger Korrekturfaktor des Heizkörpers entsprechend der DIN 834.

Die logarithmische Übertemperatur bei Nennmassestrom $\Delta_{Log,100}$ kann bspw. in einem Prüfstand für den Wärmeverbraucher (insbesondere den Heizkörper) ermittelt werden, indem der Nennmassestrom für verschiedene Vorlauftemperaturen durch den Heizkörper durchgeführt wird und die entsprechenden Messungen nach den vorstehenden Gleichungen durchgeführt werden.

Darüber hinaus sind dem Fachmann auch Möglichkeiten zur theoretischen Berechnung bspw. aus der EP 2 009 536 B1 bekannt.

Die Heizleistungsreserve HLR gibt an, wie viel Leistungsreserve der Heizkörper bei der aktuellen Vorlauftemperatur noch hat, um ggf. eine höhere Wärmeleistung durch Erhöhung des Heizträgermediums-Volumenstroms durch den Wärmeverbraucher zu erreichen. Diese Größe hat eine ähnliche Aussagekraft wie ein Versorgungszustand des Wärmeverbrauchers und kann bspw. über eine Kennlinie oder eine funktionale Abhängigkeit auch direkt in einen zuvor beschriebenen Versorgungszustand umgerechnet werden. Die Definition der Heizleistungsreserve HLR hat den Vorteil, dass sie entsprechend den vorstehenden Gleichungen aus bei der Verbrauchskostenerfassung ermittelten Größen bestimmt werden kann, ohne dass Kennlinien verwendet werden müssen. Entsprechend kann die Heizleistungsreserve HLR auch direkt zur Bestimmung des Versorgungszustandswerts GVZ herangezogen werden, d.h. der Versorgungszustandswert GVZ ist dann als Gebäude- oder Heizkreisheizleistungsreserve zu verstehen. Dies erfolgt ähnlich wie für die Bestimmung des Versorgungszustandswerts GVZ aus den Versorgungszuständen der einzelnen Wärmeverbraucher beschrieben.

Anstelle der Heizleistungsreserve HLR in der zuvor erläuterten Definition und Berechnung kann auch das Betriebsleistungsverhältnis BLV verwendet werden, welches die aktuelle Wärmeleistung des Heizkörpers in das Verhältnis zu einer Wärmeleistung bei aktueller Vorlauftemperatur und Nennmassestrom setzt. Heizleistungsreserve und Betriebsleistungsverhältnis können entsprechend der nachstehenden Formel ineinander umgerechnet werden:

$$BLV = 1 - HLR = \frac{\Delta_{Log}}{\Delta_{Log,100}}$$

Die Verwendung der Heizleistungsreserve HLR und des Betriebsleistungsverhältnisses BLV sind dem Fachmann auch in diesem Zusammenhang bekannt. Eine ausführliche theoretische Erläuterung findet sich in der EP 2 009 536 B1. Auf eine genauere Erklärung dieser bekannten Technologie kann daher an dieser Stelle verzichtet werden.

Insbesondere zu Kontrollzwecken und um die Einsparung durch die Erhöhung des Nutzungsgrads des Wärmeerzeugers zu quantifizieren, kann erfindungsgemäß nach dem Abwarten einer Änderungszeitspanne, d.h. insbesondere nach dem Absenken der Vorlauftemperatur $\vartheta_V$ um das Vorlauftemperaturdekrement $\Delta\vartheta_{V,dek}$ oder nach dem Anheben der Vorlauftemperatur $\vartheta_V$ um das Vorlauftemperaturinkrement $\Delta\vartheta_{V,ink}$, vorgesehen sein, dass der Nutzungsrad $\beta$ des Wärmeerzeugers bezogen auf die abgegebene Wärmemenge Q des Erzeugers durch die Wärmeverbraucher für ein gewähltes Zeitintervall bestimmt wird, indem der Quotient aus der durch alle Wärmeerzeuger in dem Rohrkreislauf der Heizungsanlage abgegebenen Wärmemenge Q und der dafür aufgewendeten Endenergie E gebildet wird:

$$\beta = \frac{Q}{E}.$$

Dafür wird erfindungsgemäß die durch die Heizungsanlage insgesamt abgegebene Wärmeleistung Q erfasst. Die Wärmeleistung Q ist durch die in dem Zeitintervall abgegebene Wärmemenge Q definiert. Deren Erfassung kann durch einen zentral im Rohrkreislauf eingebauten Wärmemengenzähler erfolgen, welcher bspw. die Vorlauftemperatur und die Rücklauftemperatur im Bereich des Wärmeerzeugers sowie den Volumenstrom im Rohrkreislauf der Heizungsanlage über das gewählte Zeitintervall erfasst. Durch diese Methode werden auch die Wärmeleistungsverluste im Rohrkreislauf berücksichtigt. Daher ist diese Methode für die Ermittlung des Nutzungsgrads des Wärmeerzeugers besonders genau.

Sofern die Wärmeverbraucher im Rohrkreislauf der Heizungsanlage mit Wärmemengenzählern ausgestattet sind, können auch die jeweils abgegebenen Wärmeleistungen Q in dem gewählten Zeitintervall addiert werden. Ggf. können Wärmeleistungsverluste im Rohrkreislauf durch eine geeignete Abschätzung mittels eines insbesondere von der Länge des Rohrkreislaufs abhängigen Modells abgeschätzt werden. Unter Wärmemengenzähler in diesem Sinne sind auch bspw. elektronische Heizkostenverteiler an Heizkörpern oder Wärmemengenzählern in Fußbodenheizungskreisläufen zu verstehen.

Die Länge des gewählten Zeitintervalls wird erfindungsgemäß insbesondere in Abstimmung mit Betriebsintervallen des Wärmeerzeugers festgelegt. Als Betriebsintervall des Wärmeerzeugers gilt die Zeit vom Anfang bzw. Ende einer Aufheizperiode des Wärmeträgermediums durch Einsatz von Endenergie bis zum jeweils nächsten Anfang bzw. Ende einer Aufheizperiode des Wärmeträgermediums durch Einsatz von Endenergie. Ein solches Betriebsintervall ist gerade mit der Menge der eingesetzten Endenergie korreliert, weil das Betriebsintervall die Zeit des Aufheizens des Wärmeträgermediums und die Zeit der Abgabe der durch den Einsatz der Endenergie erzeugten Wärme durch das Wärmeträgermedium umfasst. Besonders bevorzugt umfasst das gewählte Zeitintervall also gerade ein Betriebsintervall oder ein ganzzahliges Vielfaches davon, d.h. mehrere ganze Betriebsintervalle. Letzteres stellt eine bevorzugte Variante dar, weil eine Mittelung über mehrere Betriebsintervalle erfolgt und so möglicherweise auftretende besondere Effekte in einem Betriebsintervall herausgemittelt werden. Für diese Variante kann einfacher Weise ein Steuersignal von der Wärmeerzeugerregelung, bspw. der Brennerregelung der Heizungsanlage an die zur Durchführung des Verfahrens eingerichtete Steuereinrichtung an der Heizungsanlage vorgesehen sein. Alternativ oder zusätzlich lässt sich ein solches Betriebsintervall auch aus einer zeitlichen Erfassung des Verbrauchs der Endenergie ermitteln.

Eine einfachere Lösung sieht vor, das gewählte Zeitintervall so lang zu wählen, dass eine hohe Zahl von Betriebsintervallen in das gewählte Zeitintervall fällt. Eine Richtgröße sind mindestens 10 Betriebsintervalle, bevorzugt mindestens 20 Betriebsintervalle. In letzterem Fall beträgt der mögliche Fehler bei der Bestimmung der abgegebene Wärmemenge Q und der dafür aufgewendeten Endenergie nur noch 1/20=0,05, d.h. 5%. Die gewünschte Genauigkeit kann der Fachmann so je nach Bedarf einstellen.

Durch beide der vorbeschriebenen Vorgehensweisen wird - mit unterschiedlicher Genauigkeit - eine erfindungsgemäß bevorzugte Normierung auf die eingesetzte Endenergie E erreicht. Im Rahmen seines fachmännischen Könnens kann der Fachmann auch andere Normierungen wählen.

Die aufgewendete Endenergie E kann durch geeignete Sensoren erfasst werden. Hierfür eignen sich Elektroenergie- oder Gaszähler, wobei jeweils ein direkt der Heizungsanlage bzw. dem Wärmeerzeuger zugeordneter Zähler sinnvoll sein kann, sofern die Endenergie auch für andere Verbraucher benutzt wird. Dies ist häufig bei Gebäudeelektroenergiezählern der Fall, die den gesamten Stromverbrauch im Gebäude erfassen. Bei mit Öl als Energieträger betriebenen Wärmeerzeugern kann der Ölfluss zu dem Wärmeerzeuger erfasst werden. Eine alternative Möglichkeit besteht in einer genauen Erfassung des Ölstands in einem Tank. Bei einer Holzpellet-Heizung kann die Endenergie bspw. durch das Volumen oder das Gewicht der verbrauchten Pellets ermittelt werden.

Vorzugsweise werden alle erfassten Verbräuche der Endenergien E in die Einheit kWh (Kilowattstunden) umgerechnet. Dies ist im Rahmen der Verbrauchserfassung der Endenergie E bereits grundsätzlich bekannt und kann von dem Fachmann ohne weiteres umgesetzt werden. Bei nach Volumen erfassten Verbräuchen, bspw. eines Gas- oder Öldurchflusszählers oder eines Pellet-Volumenzählers, wird dazu das erfasste Messvolumen der Endenergie E mit einem bspw. empirisch ermittelten oder bekannten Brennwert multipliziert, um die Einheit kWh zu erhalten.

Teilweise ist es auch bekannt, dass die Regler der Wärmeverbraucher selbst den Verbrauch der Endenergie erfassen und über eine Schnittstelle zur Verfügung stellen. In diesem Fall sind keine weiteren Sensoren, sondern lediglich ein Anschluss der Steuereinrichtung an diese Schnittstelle, bspw. ein Bussystem, notwendig.

Für die Einstellung der für einen möglichst hohen Nutzungsgrad des Wärmeerzeugers optimierten Vor- und Rücklauftemperatur ist die vorbeschriebene Ermittlung des Nutzungsgrads erfindungsgemäß jedoch gerade nicht notwendig, weil das erfindungsgemäß vorgeschlagene Verfahren zur Erhöhung des Nutzungsgrads anstelle einer konkreten Berechnung des Nutzungsgrads in der vorbeschriebenen Weise gerade nur die Reaktionen der Rücklauftemperatur $\vartheta_R$ und des Versorgungszustandswerts GVZ auf eine Änderung der Vorlauftemperatur $\vartheta_V$ erfasst und bewertet. Diese Werte liegen in dem System ohnehin vor.

Die Rücklauftemperatur $\vartheta_R$ wird durch die Heizungsanlage selbst gemessen oder kann durch einen einfachen zusätzlichen Temperatursensor ohne großen Aufwand erfasst werden. Der Versorgungszustandswert GVZ lässt sich erfindungsgemäß aus den zur Verbrauchskostenverteilung ohnehin erhobenen Daten ermitteln, wie zuvor beschrieben. Die optionale Erfassung des tatsächlichen Nutzungsgrads des Wärmeerzeugers dient insbesondere der Bestätigung oder der Überprüfung von Modellrechnungen. Diese Größe wird erfindungsgemäß durch das vorgeschlagene Verfahren jedoch gerade nicht verwendet, um eine Erhöhung des Nutzungsgrads selbst zu erreichen.

In Weiterbildung des erfindungsgemäß vorgeschlagenen Verfahrens kann während des Betriebs der Heizungsanlage bei Anwendung des Verfahrens eine bezüglich des Nutzungsgrads des Wärmeerzeugers optimierte Vorlauftemperatureinstellung dann festgestellt werden, wenn in zwei aufeinander folgenden Verfahrenszyklen ein Wechsel zwischen einer positiven und einer negativen Rücklauftemperaturreaktion oder ein Wechsel von einem Versorgungszustandswert GVZ außerhalb des vordefinierten Wertebereichs zu einem Versorgungszustandswert GVZ innerhalb des vordefinierten Wertebereichs stattfindet. Die Vorlauftemperatur der optimierten Vorlauftemperatureinstellung wird dann vorzugsweise in Abhängigkeit von der Außentemperatur und der Tageszeit in einer Wertetabelle abgelegt.

Gemäß einer bevorzugten Weiterentwicklung dieses Aspekts der vorliegenden Erfindung kann bei einem Start des Verfahrens die in der Wertetabelle gespeicherte Vorlauftemperatur als erster Vorgabewert eingestellt werden. Diese Korrelation dient der Verkürzung der Startphase des Algorithmus nach einem Neustart.

Die erfindungsgemäß vorgeschlagene Steuereinrichtung an der Heizungsanlage ist entsprechend zur Durchführung des vorbeschriebenen Verfahrens oder Teilen hiervon eingerichtet. Eine solche Steuereinrichtung entsprechend Anspruch 8 ist insbesondere mit einer Recheneinheit, einem Anschluss zum Messen der Vorlauftemperatur und der Rücklauftemperatur eines Heizmediums in der Heizungsanlage, einem Anschluss zum Bestimmen eines Versorgungszustandswerts GVZ, bspw. des thermischen Gebäudeversorgungszustands, und einem Anschluss an den Regler eines Wärmeerzeugers zur Vorgabe einer durch den Wärmeerzeuger in der Heizungsanlage einzustellenden Vorlauftemperatur ausgestattet, wobei die Recheneinheit durch Installation geeigneter Programmcodemittel, d.h. einer geeigneten Software, zur Durchführung des vorbeschriebenen Verfahrens oder Teilen hiervon eingerichtet ist.

Um den Nutzungsgrad des Wärmeerzeugers quantifizieren zu können kann erfindungsgemäß vorgesehen sein, dass die Steuereinrichtung einen Anschluss an einen Zähler zur Erfassung der durch den Wärmeerzeuger verbrauchten Endenergie aufweist. Die Recheneinheit kann dann in der bereits beschriebenen Weise dazu eingerichtet werden, unter Verwendung der in einen bestimmten Zeitraum aufgewendeten Endenergie und der abgegebenen Wärmemenge den Nutzungsgrad des Wärmeerzeugers zu berechnen.

Ferner kann die Steuereinrichtung einen Anschluss für eine Benutzerschnittstelle aufweisen, damit der Nutzer die durch die Steuereinrichtung vorgenommene Optimierung sowie ggf. den erreichten Nutzungsgrad nachvollziehen kann. Über diese oder eine andere, ggf. auch integrierte, Benutzerschnittstelle ist ferner eine Parametrierung der Steuereinrichtung, bspw. bei der Installation oder zur Änderung von Parametern, möglich. Die Benutzerschnittstelle kann bspw. als Anschluss für einen Computer ausgebildet sein.

Die erfindungsgemäße Steuereinrichtung kann in eine Regelung des Wärmeerzeugers oder in eine Vorrichtung zur Vorlauftemperaturadaption integriert sein. Die beschriebenen Anschlüsse können entsprechend als interne oder externe Anschlüsse ausgestaltet sein.

Weitere Vorteile, Merkmale und Anwendungsmöglichkeiten der Erfindung ergeben sich aus der nachfolgenden Beschreibung eines Ausführungsbeispiels und der Zeichnung. Dabei bilden alle beschriebenen oder bildlich dargestellten Merkmale den Gegenstand der vorliegenden Erfindung, auch unabhängig von ihrer Zusammenfassung in den Ansprüchen oder deren Rückbezügen.

Es zeigen:

Fig. 1 schematisch eine Warmwasserheizungsanlage mit einer erfindungsgemäßen Steuereinrichtung gemäß einer bevorzugten Ausführungsform der Erfindung;

Fig. 2 schematisch einen durch das erfindungsgemäße Verfahren gemäß einer bevorzugten Ausführungsform realisierten Regelkreis;

Fig. 3 schematisch einen Ablaufplan des erfindungsgemäßen Verfahrens gemäß einer bevorzugten Ausführungsform;

Fig. 4 eine die Abhängigkeit der Vorlauftemperatur von der Außentemperatur vorgebende beispielhafte Heizkurve für eine Wärmeerzeugerregelung;

Fig. 5 beispielhaft den Wärmeerzeugerwirkungsgrad eines als Brennwertkessel ausgebildeten Wärmeerzeugers in Abhängigkeit von der Rücklauftemperatur;

Fig. 6 beispielhaft den Wärmeerzeugerwirkungsgrad eines als Brennwertkessel ausgebildeten Wärmeerzeugers in Abhängigkeit von der Vorlauftemperaturänderung;

Fig. 7 beispielhaft die einem Wärmeerzeugerwirkungsgrad entsprechende Arbeitszahl eines als Wärmepumpe ausgebildeten Wärmeerzeugers in Abhängigkeit der Außentemperatur;

Fig. 8 beispielhaft und unabhängig von der Art der Wärmequelle den CarnotFaktor eines Wärmepumpenprozesses in Abhängigkeit der Rücklauftemperatur.

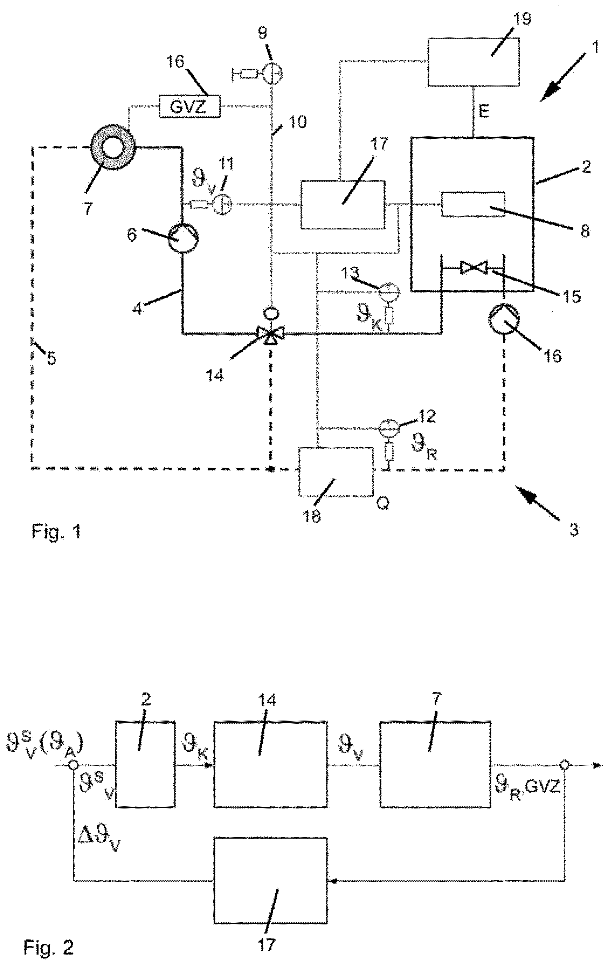

Fig. 1 stellt schematisch eine Warmwasserheizungsanlage 1 als Heizungsanlage mit einem Wärmeerzeuger 2 dar, welcher aus zugeführter Endenergie E Wärme erzeugt und als Wärmeübertragungsmedium Wasser erwärmt, das in einem Rohrkreislauf 3 zirkuliert. Der Rohrkreislauf 3 ist aus einem Vorlauf 4 (in der Zeichnung durch eine durchgezogene Linie dargestellt) und einen Rücklauf 5 (in der Zeichnung durch eine gestrichelte Linie dargestellt) gebildet. In dem Vorlauf 4 wird über eine bspw. drehzahlgeregelte oder differenzdruckgeregelte Heizkreispumpe 6 das durch den Wärmeerzeuger 2 erwärmte Wärmeübertragungsmedium (in dem beschriebenen Beispiel Wasser, ohne dass die Erfindung hierauf beschränkt sein soll) in dem Heizkreis zu Heizkörpern 7 geleitet, welche die Wärme an Räume eines Gebäudes abgeben, in denen sich die Heizkörper 7 befinden. Dabei kühlt das Wärmeträgermedium ab und wird durch den Rücklauf 5 zurück zu dem Wärmeerzeuger 2 transportiert, der das Wärmeträgermedium wieder erwärmt und durch den Vorlauf 4 wieder in den Rohrkreislauf einspeist.

Der Übersichtlichkeit halber ist in dem Rohrkreislauf 3 nur ein Heizkreis mit nur einem Heizkörper 7 dargestellt. Üblicherweise befinden sich in einem Rohrkreis lauf 3 eines Gebäudes ein oder mehrere Heizkreise, die jeweils einen oder mehrere Heizkörper 7 mit dem Wärmeträgermedium versorgen.

Der Wärmeerzeuger 2 weist eine Wärmeerzeugerregelung 8 auf, die häufig auch als Heizungsregelung bezeichnet wird und die durch den Wärmeerzeuger 2 in den Vorlauf 4 eingespeiste Vorlauftemperatur des Wärmeträgermediums auf einen vorgegebenen Temperaturwert einstellt, der bspw. durch eine in Fig. 4 dargestellte Heizkurve vorgegeben ist. Entsprechend der dort beispielhaft dargestellten Heizkurve erzeugt der Wärmeerzeuger bei einer Außentemperatur von 10°C eine Vorlauftemperatur $\vartheta_V$ von etwa 38°C. Bei einer Außentemperatur von -5°C wird eine Vorlauftemperatur $\vartheta_V$ von 58°C eingestellt. Die in der Wärmeerzeugerregelung 8 hinterlegten Heizkurven sind üblicherweise parametrierbar, um sie individuell an die jeweilige Heizung anzupassen. Die dargestellten Werte sind daher nur als Beispiel zu verstehen.

Zur Einstellung der Vorlauftemperatur wird die Außentemperatur durch einen Außentemperaturfühler 9 gemessen und über ein Kommunikationssystem 10 der Wärmeerzeugerregelung 8 zugeleitet. Bei dem Kommunikationssystem 10 kann es sich um ein Bussystem oder eine andere Kommunikationsverbindung, bspw. auch eine Punkt-zu-Punkt-Kabelverbindung, handeln. In dem dargestellten Beispiel ist das Kommunikationssystem 10 ein Bussystem, über das alle angeschlossenen Komponenten miteinander kommunizieren können, wobei die Kommunikationsverbindungen nur schematisch dargestellt sind.

Die durch die Heizkurve entsprechend Fig. 4 vorgegebene Vorlauftemperatur wird in dem Vorlauf 4 des Heizkreises des Rohrkreislaufs 3 durch einen Vorlauftemperatursensor 11 erfasst. In der Zuleitung des Rücklaufs 5 zu dem Wärmeerzeuger 2 befindet sich ein Rücklauftemperatursensor 12. Je mehr Wärme in dem Heizkreis durch den bzw. die Heizkörper 7 abgegeben wird, desto niedriger ist der Temperaturwert des Rücklauftemperatursensors 12 bei gleichbleibendem Temperaturwert des Vorlauftemperatursensors 11.

In üblichen Heizungsanlagen wird das Wärmeträgermedium durch den Wärmeerzeuger 2 auf eine Kesseltemperatur erhitzt, die über der Vorlauftemperatur des Heizkreises liegt. Diese Kesseltemperatur wird durch den Kesseltemperatursensor 13 gemessen. Die eigentliche Vorlauftemperatur im Heizkreislauf, die dem erfindungsgemäßen Verfahren zugrunde gelegt wird und die durch den Vorlauftemperatursensor 11 gemessen wird, wird in einem Mischer oder Regelventil 14 eingestellt, welches den Kesselvorlauf (gemessen mit dem Kesseltemperatursensor 13) mit dem Rücklauf 5 mischt, um die Vorlauftemperatur des Heizkreises aus der höheren Kesseltemperatur und der niedrigeren Rücklauftemperatur entsprechend einzustellen. Typischer Weise liegt die Kesseltemperatur, wie sie durch den Kesseltemperatursensor 13 erfasst wird, in der Größenordnung zwischen 2 bis 5 K über der Vorlauftemperatur im Vorlauf 4 des Heizkreises, wie sie durch den Vorlauftemperatursensor 11 gemessen wird.

Häufig findet sich noch eine hydraulische Weiche 15 oder ein Überstromventil in dem Wärmeerzeuger 2, um einen Mindestmassestrom innerhalb des Wärmeerzeugers, aufgrund geringer Wasserinhalte, entsprechend der Herstellervorgaben sicher zu stellen. Hintergrund ist eine Verdampfungsvermeidung am bzw. im Wärmeübertrager. Die hydraulische Weiche 15 bzw. das Überstromventil mischt Vorlauf und Rücklauf nach dem Wärmeerzeuger, insbesondere um eine zu niedrige Rücklauftemperatur ggf. anzuheben. Sowohl die hydraulische Weiche als auch das Überströmventil wirken sich dabei negativ auf die Rücklauftemperaturen aus, d.h. es kommt zu einer Anhebung des Temperaturniveaus.

Im Bereich des Wärmeerzeugers 2 befindet sich häufig auch noch eine drehzahlgeregelte Wärmeerzeugerpumpe 16, um den Kesselkreislauf zu betreiben. An den Heizkörpern 7 befinden sich nicht dargestellte Heizkostenverteiler, welche für jeden Heizkörper 7 die von dem Heizkörper 7 abgegebene Wärmemenge pro Zeit, d.h. die abgegebene Wärmeleistung, erfassen. Hieraus lässt sich für jeden Heizkörper ein Versorgungszustand ableiten, indem die abgegebene Wärmeleistung für die jeweilige Vorlauftemperatur in Relation zu einer Nenn-Wärmeleistung gesetzt wird, die der Heizkörper 7 bei maximalem Volumenstrom abgeben kann. Dies wurde eingangs bereits grundsätzlich ausführlich erläutert. Hierfür kommen verschiedene konkrete Berechnungsmöglichkeiten in Betracht.

Aus dem Versorgungszustand für jeden einzelnen Heizkörper 7 des Heizkreises lässt sich ein (Gebäude-)Versorgungszustandswert GVZ, bspw. mittels einer Fuzzy-Logik, ermitteln, der den Gesamtversorgungszustand des Gebäudes im Hinblick auf die Wärmeversorgung beschreibt. Dieser (Gebäude- )Versorgungszustandswert GVZ wird in einem Gebäudeversorgungszustandsmodul 16 bspw. so ermittelt, wie dies eingangs bereits beschrieben wurde. Es ist bereits bekannt, einen solchen Gebäudeversorgungszustand zur adaptionsgeführten Regelung der Vorlauftemperatur zu verwenden.

Erfindungsgemäß wird dieser Gebäudeversorgungzustandswert GVZ (auch) einer erfindungsgemäßen Steuereinrichtung 17 zur Erhöhung des Nutzungsgrads des Wärmeerzeugers 2 (bspw. über das Kommunikationssystem 10) zur Verfügung gestellt.

Es ist auch möglich, das Gebäudeversorgungzustandsmodul 16 mit in die Steuereinrichtung 17 zu integrieren. In dem dargestellten Ausführungsbeispiel sind das Gebäudeversorgungzustandsmodul 16, die Steuereinrichtung 17 gemeinsam mit den beschriebenen Sensoren 9, 11, 13, 17, dem Mischer 14 zur Einstellung der Vorlauftemperatur im Heizkreis und der Wärmeleistungsregelung 8 des Wärmeerzeugers 2 an das Kommunikationsnetz 10 angeschlossen.

So hat die Steuereinrichtung 17 insbesondere Zugriff auf den Versorgungszustandswert GVZ, die durch den Vorlauftemperatursensor 11 erfasste Vorlauftemperatur $\vartheta_V$ sowie die durch den Rücklauftemperatursensor 12 erfasste Rücklauftemperatur $\vartheta_R$.

Unter Verwendung dieser Größen ist die Steuereinrichtung 17 erfindungsgemäß zur Durchführung des nachfolgend beschriebenen Verfahrens eingerichtet, wobei der in Fig. 2 gezeigte Regelkreis realisiert wird.

Der in Fig. 2 dargestellte Regelkreis basiert auf einer Sollwertvorgabe der Vorlauftemperatur $\vartheta_V^S(\vartheta_A)$ in Abhängigkeit von der Außentemperatur $\vartheta_A$, wie sie bspw. durch eine Heizkurve gemäß Fig. 4 vorgegeben wird. Diese wird, solange eine Vorlauftemperaturänderung $\Delta\vartheta_V$ aus der Steuereinrichtung 17 noch nicht vorliegt bzw. Null ist, als Sollwert für die Vorlauftemperatur $\vartheta_V^S$ unverändert an dem Wärmeerzeuger 2 mit der Wärmeerzeugerregelung 8 weitergeleitet. Die Wärmeerzeugerregelung 8 erzeugt in Abhängigkeit von diesem Sollwert $\vartheta_V^S$ eine Kesseltemperatur $\vartheta_K$, welche in dem Mischer 14 entsprechend der Sollwertvorgabe $\vartheta_V^S$ zur Vorlauftemperatur $\vartheta_V$ im Heizkreis gemischt wird.

Durch die Heizkörper 7 in dem Heizkreis des Gebäudes wird Wärme abgegeben, so dass das Wärmeträgermedium sich von der Vorlauftemperatur $\vartheta_V$ auf die Rücklauftemperatur $\vartheta_R$ abkühlt, die dem Wärmeerzeuger 2 im Rücklauf 5 wieder zugeführt wird.

Aus den Versorgungszuständen der einzelnen Heizkörper 7 wird der (Gebäude-)Versorgungszustandswert GVZ ermittelt. Die Rücklauftemperatur $\vartheta_R$ und der (Gebäude-)Versorgungszustandswert GVZ gehen als Eingangsgrößen in die Steuereinrichtung 17 ein, die daraus eine Vorlauftemperaturänderung $\Delta\vartheta_V$ ermittelt, welche die Sollwertvorgabe von der Heizkurve $\vartheta_V^S(\vartheta_A)$ auf den Sollwert der Vorlauftemperatur $\vartheta_V^S$ ändert, der dem Wärmeerzeuger 2 zugeführt wird. Durch die Vorgabe der Vorlauftemperaturänderung $\Delta\vartheta_V$ kann die Steuereinrichtung 17 den Nutzungsgrad des Wärmeerzeugers erhöhen.

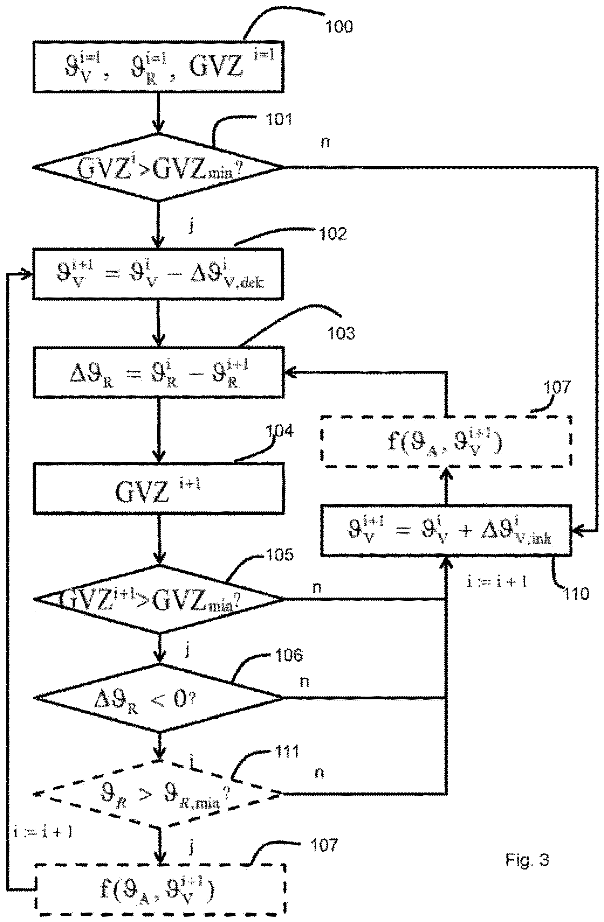

Das dabei angewandte, erfindungsgemäße Verfahren wird nachfolgend mit Bezug auf Fig. 3 im Detail beschrieben.

Das erfindungsgemäß vorgeschlagene Verfahren beginnt gemäß einer besonders bevorzugten Ausführungsform im ersten Verfahrenszyklus mit dem Messen der Vorlauftemperatur $\vartheta_V^i$ durch den Vorlauftemperatursensor 11 und das Messen der Rücklauftemperatur $\vartheta_R^i$ durch den Rücklauftemperatursensor 12 des Wärmeübertragungsmediums (auch als Heizmedium bezeichnet) in der Warmwasserheizungsanlage 1. Die Variable i steht hierbei für den aktuellen Verfahrenszyklus, d.h. zu Beginn des Verfahrens ist die Variable i=1. Dies erfolgt im Verfahrensschritt 100. Ferner wird durch das Gebäudeversorgungszustandsmodul 16 der Gebäudeversorgungszustand GVZ bestimmt.

In dem nächsten Verfahrensschritt 101 wird überprüft, ob der Versorgungszustandswert GVZ$^i$ größer als ein minimaler Versorgungszustandswert GVZ$_{min}$ ist. Ist dies der Fall ("j"), liegt der Versorgungszustandswert GVZ$^i$ innerhalb des vordefinierten Wertebereichs, der eine Absenkung der Vorlauftemperatur $\vartheta_V$ erlaubt, ohne dass die Warmwasserheizungsanlage 1 einen Unterversorgungszustand aufweist.

Für den Fall, dass der Gebäudeversorgungszustand GVZ$^i$ größer als der minimale Gebäudeversorgungszustand GVZ$_{min}$ ist ("j"), wird die ermittelte Vorlauftemperatur $\vartheta_V$ in Schritt 102 um das Vorlauftemperaturdekrement $\Delta\vartheta_{V,dek}$ reduziert und eine Änderungszeitspanne abgewartet, damit sich die Auswirkungen dieser Änderungen der Vorlauftemperatur $\vartheta_V$ in der Warmwasserheizungsanlage 1 zeigen.

In dem dann folgenden Schritt 103 wird die Auswirkung der Vorlauftemperaturänderung $\Delta\vartheta_V$ auf die Rücklauf-

temperatur $\vartheta_R$ ermittelt, indem nach Messen der Rücklauftemperatur $\vartheta_R^i$ die Rücklauftemperaturänderung $\Delta\vartheta_R$ ermittelt wird.

In einem nachfolgenden Schritt 104 wird der neue Gebäudeversorgungszustand GVZ$^{i+1}$ nach Änderung der Vorlauftemperatur $\vartheta_V$ durch das Gebäudeversorgungszustandsmodul 16 festgestellt und in der darauf nachfolgenden Überprüfung 105 überprüft, ob der neue Gebäudeversorgungszustand GVZ$^{i+1}$ größer als der minimale Gebäudeversorgungszustand GVZ$_{min}$ ist. Ist dies der Fall ("j"), liegt auch der neue Gebäudeversorgungszustand GVZ$^{i+1}$ in einem Wertebereich, welcher eine weitere Absenkung der Vorlauftemperatur $\vartheta_V$ erlaubt, ohne dass die Warmwasserheizungsanlage 1 einen Unterversorgungszustand aufweist.

Für diesen Fall wird nachfolgend überprüft (Verfahrensschritt 106), ob die Rücklauftemperaturänderung $\Delta\vartheta_R$ kleiner als Null ist. Wenn dies der Fall ist, wurde durch die Absenkung der Vorlauftemperatur $\vartheta_V$ der Nutzungsgrad des Wärmeerzeugers 2 erhöht. In diesem Fall ("j") kann durch eine weitere Vorlauftemperaturabsenkung in Höhe des Vorlauftemperaturdekrements $\Delta\vartheta_{V,dek}$ versucht wer den, den Nutzungsgrad weiter zu erhöhen. Dies erfolgt durch Rückkehr zu dem Verfahrensschritt 102 in dem nachfolgenden Verfahrenszyklus i+1.

In einem optionen Verfahrenschritt 111 kann vor der Durchführung der weiteren Temperaturabsenkung auch noch überprüft werden, ob die Rücklauftemperatur $\vartheta_R$ größer als eine vorgegebene minimale Rücklauftemperatur $\vartheta_{R,min}$ ist. Trifft dies zu ("j"), wird wie zuvor beschrieben in den nachfolgenden Verfahrenszyklus i+1 gewechselt.

Optional kann dabei in einer Kennlinienermittlung 107 der Wert der aktuellen Vorlauftemperatur $\vartheta_V^{i+1}$ zusammen mit der aktuellen Außentemperatur $\vartheta_A$ zur Kennlinienermittlung abgelegt werden. Diese Kennlinie $f(\vartheta_A, \vartheta_V^{i+1})$ gibt die jeweils optimierte Vorlauftemperaturänderung $\Delta\vartheta_V$ in Abhängigkeit einer bestimmten Außentemperatur $\vartheta_A$ an. Diese Kennlinie $f(\vartheta_A, \vartheta_V^{i+1})$ wird regelmäßig aktualisiert und kann so bspw. zur Ermittlung eines Startwerts herangezogen werden.

Für den Fall, dass in einem der Schritte 101 oder 105 der jeweils aktuelle (Gebäude-)Versorgungszustand GVZ$^i$ oder GVZ$^{i+1}$ kleiner als der minimale (Gebäude-)Versorgungszustandswert GVZ$_{min}$ ist, erfolgt in einem Verfahrensschritt 110 eine Anhebung der Vorlauftemperatur um das Vorlauftemperaturinkrement $\Delta\vartheta_{V,ink}$ als Vorlauftemperaturänderung $\Delta\vartheta_V$, um die Wärmeversorgung in dem Gebäude zu erhöhen und den (Gebäude-)Versorgungszustandswert GVZ in den vordefinierten Wertebereich zurückzubringen, welcher eine Absenkung der Vorlauftemperatur erlaubt, ohne dass die Heizungsanlage einen Unterversorgungszustand aufweist.

Entsprechend erfolgt bei einer negativen Prüfung in den Verfahrenschritten 105 und/oder 106 in dem Verfahrensschritt 110 eine Anhebung der Vorlauftemperatur um das Vorlauftemperaturinkrement $\Delta\vartheta_{V,ink}$ als Vorlauftemperaturänderung $\Delta\vartheta_V$, weil die zuvor erfolgte Vorlauftemperaturabsenkung offensichtlich zu einem ungewünschten Ergebnis geführt hat. Entweder war die Rücklauftemperaturänderung $\Delta\vartheta_R$ größer als Null, was auf einen schlechteren Wirkungsgrad für den Wärmeerzeuger hindeutet, oder die Rücklauftemperatur $\vartheta_R$ ist unter die vorgegebene minimale Rücklauftemperatur $\vartheta_{R,min}$ gefallen, was bspw. aufgrund einer Vorgabe durch den Hersteller einen ungewünschten Betriebszustand für den Wärmeerzeuger anzeigt. Dies wird durch eine Anhebung der Vorlauftemperatur wieder korrigiert.

Auch im Falle einer Vorlauftemperaturerhöhung kann eine Kennlinienfassung 107 stattfinden, welche die Außentemperatur $\vartheta_A$ in Relation zu der aktuellen Vorlauftemperatur $\vartheta_V^{i+1}$ setzt. Diese Kennlinie $f(\vartheta_A, \vartheta_V^{i+1})$ kann als Startwert des Verfahrens nach einer Wiederinbetriebnahme der Heizungsanlage 1 verwendet werden.

Das Vorlauftemperaturdekrement $\Delta\vartheta_{V,dek}$ kann zur Gewährleistung einer minimalen Vorlauftemperatur $\vartheta_{V,min}$ so gewählt werden, dass das Vorlauftemperaturdekrement $\Delta\vartheta_{V,dek}$ proportional zur Differenz der aktuellen Vorlauftemperatur $\vartheta_V^i$ und der minimalen Vorlauftemperatur $\vartheta_{V,min}$ gewählt wird, die im Falle eines Heizbetriebs nicht unterschritten werden sollte. Die Ermittlung des Vorlauftemperaturdekrements $\Delta\vartheta_{V,dek}$ nach dieser optionalen Ausführungsform kann also entsprechend der nachfolgend wiedergegebenen Gleichung erfolgen:

$$\Delta\vartheta_{V,dek} = (\vartheta_V^i - \vartheta_{V,min}) \cdot Param$$

Die Proportionalitätskonstante *Param* kann frei wählbar sein und bspw. den Wert 0,05 aufweisen, so dass das Vorlauftemperaturdekrement jeweils 5% des Abstands der aktuellen Vorlauftemperatur $\vartheta_V^i$ zu der vordefinierten bzw.

vorgegebenen minimalen Vorlauftemperatur $\vartheta_{V,min}$ aufweist, die unbedingt eingehalten werden soll. Hierdurch wird ein Unterschreiten der minimalen Vorlauftemperatur $\vartheta_{V,min}$ vermieden. In ähnlicher Weise kann, wie bereits beschrieben, ein Vorlauftemperaturinkrement $\Delta\vartheta_{V,ink}$ definiert werden.

Im Rahmen der Ermittlung der Vorlauftemperatur $\vartheta_V^i$, der Rücklauftemperatur $\vartheta_R^i$ und des (Gebäude-)Versorgungszustandswerts GVZ$^i$ in Verfahrensschritt 100 kann optional zusätzlich überprüft werden, ob sich der Wärmeerzeuger 2 überhaupt im Heizbetrieb befindet. Als Kriterium kann hierfür überprüft werden, ob die gemessene Vorlauftemperatur $\vartheta_V^i$ größer als die minimale Vorlauftemperatur $\vartheta_{V,min}$ ist. Diese minimale Vorlauftemperatur $\vartheta_{V,min}$ kann bspw. bei 35°C liegen. Eine höhere Vorlauftemperatur zeigt dann zuverlässig einen Heizbetrieb an. Alternativ kann die Förderhöhe der Heizungsumwälzpumpe gemessen werden. Diese muss größer Null bzw. größer als ein Minimalwert $dp_{min}$ sein.

Das vorstehend beschriebene Verfahren zur Erhöhung des Nutzungsgrads des Wärmeerzeugers findet im Falle einer solchen (optionalen) Überprüfung nur statt, wenn überhaupt ein Heizbetrieb vorliegt. Unter dem Heizbetrieb wird dabei insbesondere eine Betriebsart ohne Trinkwassererwärmung verstanden. Beim Betrieb des Brenners nur zur Trinkwassererwärmung ist das erfindungsgemäße Verfahren meist nicht geeignet, den Nutzungsgrad des Wärmeerzeugers zu erhöhen.

Im Rahmen der Kennlinienermittlung 107 kann zu Überprüfungszwecken ergänzend vorgesehen sein, den tatsächlichen Nutzungsgrad $\beta$ des Wärmeerzeugers 2 bezogen auf die Raumheizwärme für das aktuelle Zeitintervall zu bestimmen. Der Nutzungsgrad $\beta$ ist definiert als das Verhältnis der abgegebenen Wärmemenge Q des Wärmeerzeugers 2 für die Raumheizung dividiert durch die eingesetzte Endenergie E. Die abgegebene Wärmemenge Q kann bspw. durch einen Wärmemengenzähler 18 (vgl. Fig. 1) ermittelt werden, welcher die Kesseltemperatur $\vartheta_K$, die Rücklauftemperatur $\vartheta_R$ und den Volumenstrom durch den Rohrkreislauf 3 erfasst. Hieraus kann die pro Zeitintervall abgegebene Wärmemenge Q in bekannter Weise berechnet werden. Die Endenergie E kann durch einen Endenergiezähler 19, bspw. einen Gaszähler, einen Elektroenergiezähler, einen Volumenmesszähler für Öl oder verbrauchte Pellets oder dergleichen ermittelt werden. Ein solcher Endenergiezähler 19 kann in den Eintrag der zugeführten Endenergie E integriert sein.

Sowohl der Wärmemengenzähler 18 als auch der Endenergiezähler 19 kann so eingerichtet sein, dass sie die gemessene Energie jeweils in Kilowattstunden (kWh) angeben, so dass diese Größen unmittelbar vergleichbar sind.

Hierdurch ist es möglich, die durch das erfindungsgemäß vorgeschlagene Verfahren ermittelte Optimierung des Nutzungsgrads $\beta$ anhand von Messgrößen tatsächlich zu überprüfen.

Es wird jedoch ausdrücklich darauf hingewiesen, dass die Ermittlung des Nutzungsgrads $\beta$ des Wärmeerzeugers 2 nicht Teil des eigentlichen Optimierungsverfahrens sein muss, das ausschließlich mit den Messgrößen Gebäudeversorgungszustandswert GVZ, Vorlauftemperatur $\vartheta_V$ und Rücklauftemperatur $\vartheta_R$ auskommt, um den Nutzungsgrad $\beta$ des Wärmeerzeugers 2 zu optimieren. Hierin liegt gerade der Vorteil des erfindungsgemäß vorgeschlagenen Verfahrens sowie der zur Durchführung des Verfahrens eingerichteten Steuereinrichtung 17.

**Bezugszeichenliste:**

1    (Warmwasser-)Heizungsanlage
2    Wärmeerzeuger
3    Rohrkreislauf
4    Vorlauf
5    Rücklauf
6    drehzahl- oder differenzdruckgeregelte Heizkreispumpe
7    als Heizkörper ausgebildeter Wärmeverbraucher
8    Wärmeerzeuger- oder Heizungsregelung
9    Außentemperatursensor
10   Kommunikationssystem
11   Vorlauftemperatursensor
12   Rücklauftemperatursensor
13   Kesseltemperatursensor
14   Mischer
15   Hydraulische Weiche

16    Gebäudeversorgungszustandsmodul
17    Steuereinrichtung
18    Wärmemengenzähler
19    Endenergiezähler

E      zugeführte Endenergie
Q      abgegebene Wärme
$\dot{Q}$      Wärmeleistung (thermische Leistung)
GVZ   (Gebäude-)Versorgungszustandswert

**Patentansprüche**

1. Verfahren zur Erhöhung des Nutzungsgrads eines Wärmeerzeugers (2) in einer Heizungsanlage (1), welcher aus Endenergie (E) Wärme erzeugt und ein in einem Rohrkreislauf (3) aus Vorlauf (4) und Rücklauf (5) der Heizungsanlage (1) zirkulierendes Wärmeübertragungsmedium erwärmt, bei dem die folgenden Verfahrensschritte nacheinander oder in einer getauschten Reihenfolge durchgeführt werden, in der die Verfahrensschritte (a) und (b) sowie (d) und (e) sowie (f) und (g) und (h) in ihrer Reihenfolge jeweils getauscht werden:

   (a) Messen der Vorlauftemperatur ($\vartheta_V$) und der Rücklauftemperatur ($\vartheta_R$) des Wärmeübertragungsmediums in der Heizungsanlage (1);
   (b) Bestimmen eines Versorgungszustandswerts (GVZ), welcher den Wärmebedarf in einem Gebäude definiert und den durch die Heizungsanlage (1) zu deckenden Wärmebedarf der an den Rohrkreislauf (3) der Heizungsanlage (1) angeschlossenen Wärmeverbraucher (7) anzeigt, und Überprüfen, ob der Versorgungszustandswert (GVZ) innerhalb eines vordefinierten Wertebereichs liegt, welcher eine Absenkung der Vorlauftemperatur ($\vartheta_V$) erlaubt, ohne dass die Heizungsanlage (1) einen Unterversorgungszustand aufweist;
   (c) Absenken der Vorlauftemperatur ($\vartheta_V$) um ein vorbestimmtes Vorlauftemperaturdekrement ($\Delta\vartheta_{V,dek}$) und Abwarten einer Änderungszeitspanne, welche derart bemessen ist, dass das Ändern der Vorlauftemperatur ($\Delta\vartheta_V$) Auswirkungen in der Heizungsanlage (1) zeigt;
   (d) Messen der Rücklauftemperatur ($\vartheta_R$) und Bestimmen der Rücklauftemperaturänderung ($\Delta\vartheta_R$) nach der Änderung der Vorlauftemperatur ($\vartheta_V$);
   (e) Bestimmen eines Versorgungszustandswerts (GVZ) nach der Änderung der Vorlauftemperatur ($\vartheta_V$);
   (f) Überprüfen, ob die Rücklauftemperaturänderung ($\Delta\vartheta_R$) kleiner Null ist und ob der Versorgungszustandswert (GVZ) innerhalb des vordefinierten Wertebereichs liegt, wobei das Verfahren in diesem Fall mit dem Verfahrensschritt (c) fortgesetzt wird;
   (g) Überprüfen, ob die Rücklauftemperaturänderung ($\Delta\vartheta_R$) größer Null ist, wobei in diesem Fall die Vorlauftemperatur ($\vartheta_V$) um ein Vorlauftemperaturinkrement ($\Delta\vartheta_{V,ink}$) angehoben wird, eine Änderungszeitspanne abgewartet wird und das Verfahren mit dem Verfahrensschritt (d) fortgesetzt wird;
   (h) Überprüfen, ob der Versorgungszustandswert (GVZ) außerhalb des vordefinierten Wertebereichs liegt, wobei in diesem Fall die Vorlauftemperatur ($\vartheta_V$) um ein Vorlauftemperaturinkrement ($\Delta\vartheta_{V,ink}$) angehoben wird, eine Änderungszeitspanne abgewartet wird und das Verfahren mit dem Verfahrensschritt (d) fortgesetzt wird.

2. Verfahren nach Anspruch 1, **dadurch gekennzeichnet, dass** in einem zusätzlichen Verfahrensschritt (i) überprüft wird, ob die Rücklauftemperatur ($\vartheta_R$) größer als eine vorgegebene minimale Rücklauftemperatur ($\vartheta_{R,min}$) ist, wobei die Vorlauftemperatur ($\vartheta_V$) um ein Vorlauftemperaturinkrement ($\Delta\vartheta_{V,ink}$) angehoben wird, eine Änderungszeitspanne abgewartet wird und das Verfahren mit dem Verfahrensschritt (d) fortgesetzt wird, wenn die Rücklauftemperatur ($\vartheta_R$) kleiner als die vorgegebene minimale Rücklauftemperatur ($\vartheta_{R,min}$) ist.

3. Verfahren nach Anspruch 1 oder 2, **dadurch gekennzeichnet, dass** die Verfahrensschritte während des Heizbetriebs der Heizungsanlage (1) durchgeführt werden.

4. Verfahren nach Anspruch der vorhergehenden Ansprüche, **dadurch gekennzeichnet, dass** das Vorlauftemperaturdekrement ($\Delta\vartheta_{V,dek}$) bzw. das Vorlauftemperaturinkrement ($\Delta\vartheta_{V,ink}$) aus der aktuellen Vorlauftemperatur ($\vartheta_V$) und einer in der Heizungsanlage vorgegebenen minimalen Vorlauftemperatur ($\vartheta_{V,min}$) bzw. maximalen Vorlauftemperatur ($\vartheta_{V,max}$) berechnet wird.

5. Verfahren nach einem der vorhergehenden Ansprüche, **dadurch gekennzeichnet, dass** das Vorlauftemperaturinkrement ($\Delta\vartheta_{V,ink}$) und/oder das Vorlauftemperaturdekrement ($\Delta\vartheta_{V,dek}$) in Abhängigkeit von dem Versorgungszustandswert (GVZ) ermittelt wird.

6. Verfahren nach einem der vorhergehenden Ansprüche, **dadurch gekennzeichnet, dass** der Versorgungszustandswert (GVZ) aus Versorgungszuständen von in dem Rohrkreislauf (3) der Heizungsanlage (1) angeordneten Wärmeverbrauchern (7) ermittelt wird, wobei der Versorgungszustand eines Wärmeverbrauchers (7) den zusätzlichen positiven oder negativen Wärmebedarf des Wärmeverbrauchers (7) anzeigt und mit dem Volumenstrom und/oder Temperaturen des den Wärmeverbraucher (7) durchströmenden Wärmeübertragungsmediums über Kennlinien korreliert ist.

7. Verfahren nach Anspruch 6, **dadurch gekennzeichnet, dass** der Versorgungszustand eines als Heizkörper ausgebildeten Wärmeverbrauchers (7) aus Heizkörper-Temperaturwerten mittels Kennlinien ermittelt wird, wobei die Heizkörper-Temperaturwerte durch einem an der Oberfläche des Heizkörpers angebrachten Heizkostenverteiler gemessen werden.

8. Verfahren nach einem der vorhergehenden Ansprüche, **dadurch gekennzeichnet, dass** nach dem Abwarten einer Änderungszeitspanne der Nutzungsrad des Wärmeerzeugers bezogen auf die abgegebene Wärmemenge (Q) des Wärmeerzeugers (2) durch die Wärmeverbraucher (7) für ein gewähltes Zeitintervall bestimmt wird, indem der Quotient aus der durch alle Wärmeerzeuger (7) in dem Rohrkreislauf (3) der Heizungsanlage (1) abgegebenen Wärmemenge (Q) und der dafür aufgewendeten Endenergie (E) gebildet wird.

9. Verfahren nach einem der vorhergehenden Ansprüche, **dadurch gekennzeichnet, dass** während des Betriebs eine bezüglich des Nutzungsgrads des Wärmeerzeugers (2) optimierte Vorlauftemperatureinstellung dann festgestellt wird, wenn in zwei aufeinander folgenden Verfahrenszyklen ein Wechsel zwischen einer positiven und einer negativen Rücklauftemperaturänderung ($\Delta\vartheta_R$) oder ein Wechsel von einem Versorgungszustandswert (GVZ) außerhalb des vordefinierten Wertebereichs zu einem Versorgungszustandswert (GVZ) innerhalb des vordefinierten Wertebereichs stattfindet, und dass die Vorlauftemperatur ($\vartheta_V$) der optimierten Vorlauftemperatureinstellung in Abhängigkeit von der Außentemperatur ($\vartheta_A$) und der Tageszeit in einer Wertetabelle abgelegt wird.

10. Steuereinrichtung zur Erhöhung des Nutzungsgrads eines Wärmeerzeugers (2) in einer Heizungsanlage (1) mit einer Recheneinheit, einem Anschluss zum Messen der Vorlauftemperatur ($\vartheta_V$) und der Rücklauftemperatur ($\vartheta_R$) eines Heizmediums in der Heizungsanlage (1), einem Anschluss zum Bestimmen eines Versorgungszustandswerts (GVZ) und einem Anschluss an die Wärmeerzeugerregelung (8) zur Vorgabe einer durch den Wärmeerzeuger (2) in der Heizungsanlage (1) einzustellenden Vorlauftemperatur $\left(\vartheta_V^S\right)$, **dadurch gekennzeichnet, dass** die Recheneinheit zur Durchführung des Verfahrens nach einem der Ansprüche 1 bis 9 eingerichtet ist.

11. Steuereinrichtung nach Anspruch 10, **dadurch gekennzeichnet, dass** die Steuereinrichtung (17) einen Anschluss an einen Zähler (19) zur Erfassung der durch den Wärmeerzeuger (2) verbrauchten Endenergie (E) aufweist.

**Claims**

1. A method for increasing the utilisation rate of a heat generator (2) in a heating system (1) which produces heat from final energy (E) and heats a heat transfer medium circulating in a pipe circuit (3) made up of a feed line (4) and a return line (5) in the heating system (1), in which the following process stage are performed in succession or in a switched series in which process stages (a) and (b) and also (d) and (e) and also (f) and (g) and (h) are each switched in their sequence:

(a) measurement of the feed temperature ($\vartheta_V$) and the return temperature ($\vartheta_R$) of the heat transfer medium in the heating system (1);
(b) determination of a supply state value (GVZ) which defines the heat requirement in a building and indicates the heat requirement to be covered by the heating system (1) of the heat consumer (7) attached to the pipe circuit (3) of the heating system (1), and examination of whether the supply state value (GVZ) lies within a predefined value range which allows a lowering of the feed temperature ($\vartheta_V$) without the heating system (1) exhibiting an undersupply state;
(c) lowering of the feed temperature ($\vartheta_V$) by a predetermined feed temperature decrement ($\Delta\vartheta_{V,dec}$) and waiting for a change time period which is measured in such a manner that the change in the feed temperature ($\Delta\vartheta_V$)

has an impact in the heating system (1);

(d) measurement of the return temperature ($\vartheta_V$) and determination of the return temperature change ($\Delta\vartheta_R$) following the change in the feed temperature ($\vartheta_V$);

(e) determination of a supply state value (GVZ) following the change in the feed temperature ($\vartheta_V$);

(f) examination of whether the return flow temperature change ($\Delta\vartheta_R$) is smaller than zero and whether the supply state value (GVZ) lies within the predefined value range, wherein the method in this case is continued with process state (c);

(g) examination of whether the return flow temperature change ($\Delta\vartheta_R$) is greater than zero, wherein in this case the feed temperature ($\vartheta_V$) is increased by a feed temperature increment ($\Delta\vartheta_{V,inc}$), a change time period is waited for and the method is continued with process stage (d);

(h) examination of whether the supply state value (GVZ) lies outside the predefined value range, wherein in this case the feed temperature ($\vartheta_V$) is increased by a feed temperature increment ($\Delta\vartheta_{V,inc}$), a change time period is waited for and the method is continued with process stage (d).

2. The method according to claim 1, **characterized in that** in an additional process stage (i) there is an examination of whether the return temperature ($\vartheta_R$) is greater than a predefined minimum return flow temperature ($\vartheta_{R,min}$), wherein the feed line temperature ($\vartheta_V$) is increased by a feed temperature increment ($\Delta\vartheta_{V,inc}$), a change time period is waited for and the process is continued with process stage (d), when the return temperature ($\vartheta_R$) is smaller than the predefined minimum return temperature ($\vartheta_{R,min}$).

3. The method according to claim 1 or 2, **characterized in that** process stages are carried out while the heating system (1) is in heating operation.

4. The method according to claim of the preceding claims, **characterized in that** the feed temperature decrement ($\Delta\vartheta_{V,dec}$) or else the feed temperature increment ($\Delta\vartheta_{V,inc}$) is calculated from the current feed temperature ($\vartheta_V$) and a minimum feed temperature ($\vartheta_{V,min}$) or a maximum feed temperature ($\vartheta_{V,max}$) predefined in the heating system.

5. The method according to one of the preceding claims, **characterized in that** the feed temperature increment ($\Delta\vartheta_{V,inc}$) and/or the feed temperature decrement ($\Delta\vartheta_{V,dec}$) is determined depending on the supply state value (GVZ).

6. The method according to one of the preceding claims, **characterized in that** the supply state value (GVZ) is determined from supply states of heat consumers (7) arranged in the pipe circuit (3) of the heating system (1), wherein the supply state of a heat consumer (7) indicates the additional positive or negative requirement of the heat consumer (7) and is correlated with the volume flow and/or temperatures of the heat transfer medium flowing through the heat consumer (7) by characteristic curves.

7. The method according to claim 6, **characterized in that** the supply state of a heat consumer (7) configured as a radiator is determined from radiator temperature values by means of characteristic curves, wherein the radiator temperature values are measured by a heating cost distributor attached to the surface of the radiator.

8. The method according to one of the preceding claims, **characterized in that** after a change time period has been waited for, the utilisation rate of the heat generator relative to the quantity of heat delivered (Q) by the heat generator (2) is determined by the heat consumer (7) for a selected interval of time, **in that** the quotient is obtained from the quantity of heat (Q) emitted by all heat generators (7) in the pipe circuit (3) of the heating system (1) and the final energy (E) expended for this purpose.

9. The method according to one of the preceding claims, **characterized in that** during operation, a feed temperature setting optimized in respect of the utilization rate of the heat generator (2) is determined when there is a change in two consecutive process cycles between a positive and a negative return flow temperature change ($\Delta\vartheta_R$) or a switch from a supply state value (GVZ) outside the predefined value range to a supply state value (GVZ) within the predefined value range and that the feed temperature ($\vartheta_V$) of the optimized feed temperature setting is stored in the value table as a function of the outside temperature ($\vartheta_A$) and the time of day.

10. A control mechanism for increasing the utilization rate of a heat generator (2) in a heating system (1) with a computing unit, a connection for measuring the feed temperature ($\vartheta_V$) and the return temperature ($\vartheta_R$) of a heating medium in the heating system (1), a connection for determining a supply state value (GVZ) and a connection to the heat generator control (8) for specifying a feed temperature ($\vartheta^S_V$) to be set by the heat generator (2) in the heating system (1), **characterized in that** the computing unit is set up to carry out the method according to one of claims 1 to 9.

**11.** The control mechanism according to claim 10, **characterized in that** the control device (17) has a connection to a meter (19) for recording the final energy (E) consumed by the heat generator (2).

**Revendications**

**1.** Procédé pour l'augmentation du taux d'utilisation d'un générateur de chaleur (2) dans un système de chauffage (1), lequel générateur génère de la chaleur à partir d'énergie finale (E) et chauffe un fluide de transfert de chaleur circulant dans un circuit tubulaire (3) composé d'un aller (4) et d'un retour (5) du système de chauffage (1), dans lequel les étapes opératoires suivantes sont réalisées les unes après les autres ou dans un ordre inverse et dans lequel les étapes opératoires (a) et (b), de même que (d) et (e) et que (f) et (g) et (h), changent respectivement d'ordre:

(a) mesure de la température aller ($\vartheta_V$) et de la température retour ($\vartheta_R$) du fluide de transfert de chaleur dans le système de chauffage (1) ;

(b) définition d'une valeur d'état d'alimentation (GVZ) qui définit le besoin thermique dans un bâtiment et affiche le besoin thermique à couvrir par le système de chauffage (1) du consommateur de chaleur (7) raccordé au circuit tubulaire (3) du système de chauffage (1), et vérification si la valeur d'état d'alimentation (GVZ) se situe dans une plage de valeurs prédéfinie qui permet une baisse de la température aller ($\vartheta_V$) sans que le système de chauffage (1) présente un état de sous-alimentation ;

(c) diminution de la température aller ($\vartheta_V$) à raison d'une décroissance prédéfinie de la température aller ($\Delta\vartheta_{V,dek}$) et attente d'un laps de temps de changement qui est dimensionné de manière à ce que la modification de la température aller ($\Delta\vartheta_V$) présente des effets dans le système de chauffage (1) ;

(e) mesure de la température retour ($\vartheta_R$) et définition de la modification de la température retour ($\Delta\vartheta_R$) après la modification de la température aller ($\vartheta_V$) ;

(e) définition d'une valeur d'état d'alimentation (GVZ) après la modification de la température aller ($\vartheta_V$) ;

(f) vérification si la modification de la température retour ($\Delta\vartheta_R$) est inférieure à zéro et si la valeur d'état d'alimentation (GVZ) se situe dans la plage de valeurs prédéfinie, le procédé se poursuivant dans ce cas par l'étape opératoire (c) ;

(g) vérification si la modification de la température retour ($\Delta\vartheta_R$) est supérieure à zéro, sachant que, dans ce cas, la température aller ($\vartheta_V$) est relevée à raison d'un incrément de température aller ($\Delta\vartheta_{V,ink}$), un laps de temps de modification est attendu et le procédé est poursuivi par l'étape opératoire (d) ;

(h) vérification si la valeur d'état d'alimentation (GVZ) se situe en dehors de la plage de valeurs prédéfinie, sachant que, dans ce cas, la température aller ($\vartheta_V$) est relevée à raison d'un incrément de température aller ($\Delta\vartheta_{V,ink}$), un laps de temps de modification est attendu et que le procédé est poursuivi par l'étape opératoire (d).

**2.** Procédé selon la revendication 1, **caractérisé en ce que**, dans une étape opératoire supplémentaire (i), il est vérifié si la température retour ($\vartheta_R$) est supérieure à une température retour minimale prédéfinie ($\vartheta_{R,min}$), la température aller ($\vartheta_V$) étant relevée à raison d'un incrément de température aller ($\Delta\vartheta_{V,ink}$), un laps de temps de modification étant attendu et le procédé étant poursuivi par l'étape opératoire (d) si la température retour ($\vartheta_R$) est inférieure à la température retour minimale prédéfinie ($\vartheta_{R,min}$).

**3.** Procédé selon une des revendications précédentes, **caractérisé en ce que** les étapes opératoires sont réalisées pendant l'activité de chauffage du système de chauffage (1).

**4.** Procédé selon la revendication 1, **caractérisé en ce que** la décroissance de température aller $\Delta\vartheta_{V,dek}$) ou l'incrément de température aller ($\Delta\vartheta_{V,ink}$) est calculé à partir de la température aller actuelle ($\vartheta_V$) et d'une température aller minimale ($\vartheta_{V,min}$) ou d'une température aller maximale ($\vartheta_{V,max}$) prédéfinie dans le système de chauffage.

**5.** Procédé selon une des revendications précédentes, **caractérisé en ce que** l'incrément de température aller ($\Delta\vartheta_{V,ink}$) et/ou la décroissance de température aller ($\Delta_{V,dek}$) sont déterminés en fonction de la valeur d'état d'alimentation (GVZ).

**6.** Procédé selon une des revendications précédentes, **caractérisé en ce que** la valeur d'état d'alimentation (GVZ) est déterminée à partir des états d'alimentation de consommateurs de chaleur (7) disposés dans le circuit tubulaire (3) du système de chauffage (1), l'état d'alimentation d'un consommateur de chaleur (7) affichant le besoin thermique positif ou négatif supplémentaire du consommateur de chaleur (7) et étant en corrélation avec le débit volumétrique et/ou les températures du fluide de transfert thermique traversant le consommateur de chaleur (7) par des caractéristiques.

**7.** Procédé selon la revendication 6, **caractérisé en ce que** l'état d'alimentation d'un consommateur de chaleur (7) réalisé sous forme d'un corps chauffant est déterminé à partir de valeurs de température du corps chauffant au moyen de caractéristiques, les valeurs de température du corps chauffant étant mesurées par un répartiteur de frais de chauffage disposé à la surface du corps chauffant.

**8.** Procédé selon une des revendications précédentes, **caractérisé en ce que**, après l'attente d'un laps de temps de modification, le taux d'utilisation du générateur de chaleur est défini en se référant à la quantité de chaleur émise (Q) du générateur de chaleur (2) par les consommateur de chaleur (7) pour un intervalle temporel sélectionné par le fait que le quotient entre la quantité de chaleur (Q) émise par tous les générateurs de chaleur (7) dans le circuit tubulaire (3) du système de chauffage (1) et l'énergie finale (E) appliquée pour ce faire.

**9.** Procédé selon une des revendications précédentes, **caractérisé en ce que**, pendant le fonctionnement, un réglage de température aller optimisé par rapport au taux d'utilisation du générateur de chaleur (2) est alors constaté si, dans deux cycles opératoires se succédant, une alternance entre une modification de température aller positive et une négative ($\Delta\vartheta_R$) ou une alternance entre une valeur d'état d'alimentation (GVZ) en dehors de la plage de valeurs prédéfinie et une valeur d'état d'alimentation (GVZ) dans la plage de valeurs prédéfinie a lieu, et que la température aller ($\vartheta_V$) du réglage de température aller optimisé est enregistrée en fonction de la température extérieure ($\vartheta_A$) et de l'heure du jour dans un tableau de valeurs.

**10.** Dispositif de commande pour l'augmentation du taux d'utilisation d'un générateur de chaleur (2) dans un système de chauffage (1), comportant une unité de calcul, un raccordement pour la mesure de la température aller ($\vartheta_V$) et de la température retour ($\vartheta_R$) d'un fluide chauffant dans le système de chauffage (1), un raccordements pour la définition d'une valeur d'état d'alimentation (GVZ) et un raccordement au système de réglage du générateur de chaleur (8) pour la prescription d'une température aller ($\vartheta^S_V$) à régler dans le système de chauffage (1), **caractérisé en ce que** l'unité de calcul est conçue pour exécuter le procédé selon une des revendications 1 à 9.

**11.** Dispositif de commande selon la revendication 10, **caractérisé en ce que** le dispositif de commande (17) présente un raccordement à un compteur (19) pour la détection de l'énergie finale (E) consommée par le générateur de chaleur (2).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1752852 A
- EP 1456727 B1
- EP 1933220 B1
- EP 1645928 B1
- EP 2009536 B1